# FASCICULE DE BREVET EUROPEEN

(11) **EP 2 301 276 B1**
(45) Date de publication et mention de la délivrance du brevet: **13.02.2013**
(21) Numéro de dépôt: 09742287.7
(22) Date de dépôt: 09.04.2009
(51) Int. Cl.: H04W 36/00, H04W 88/18, H04W 80/04

(54) **PROCEDE DE TRANSFERT DE FLUX ENTRE POINTS D'ACCES HETEROGENES**
VERFAHREN ZUR ÜBERTRAGUNG EINES FLUSSES ZWISCHEN HETEROGENEN ZUGANGSPUNKTEN
METHOD FOR TRANSFERRING A FLOW BETWEEN HETEROGENEOUS ACCESS POINTS

(30) Priorité: 18.04.2008 FR 0852653
(43) Date de publication de la demande: 30.03.2011
(73) Titulaire: France Télécom, 75015 Paris (FR)
(72) Inventeur: SUCIU, Lucian, F-35510 Cesson Sevigne (FR); BENZAID, Mounir, F-78190 Trappes (FR); GUILLOUARD, Karine, F-35135 Chantepie (FR)
(74) Mandataire: Coda, Sandrine
(86) Numéro de dépôt international: PCT/FR2009/050635
(87) Numéro de publication internationale: WO 2009/136089

(56) Documents cités:
- HUU-NGHIA NGUYEN ET AL: "Enhancements for Simultaneous Access in Network-based Localized Mobility Management" IEEE INTERNATIONAL SYMPOSIUM ON PERSONAL, INDOOR AND MOBILE RADIO COMMUNICATIONS. PIMRC, IEEE; PI, XX, 1 septembre 2007 (2007-09-01), pages 1-5, XP031168582 ISBN: 978-1-4244-1143-6
- LUCIAN SUCIU ET AL: "A Hierarchical and Distributed Handover Management Approach for Heterogeneous Networking Environments" NETWORKING AND SERVICES, 2007. ICNS. THIRD INTERNATIONAL CONFERENCE ON, IEEE, PI, 1 juin 2007 (2007-06-01), pages 1-7, XP031207528 ISBN: 978-0-7695-2858-9
- DAMIC D PREMEC B PATIL M SAHASRABUDHE NOKIA SIEMENS NETWORKS S KRISHNAN ERICSSON D: "Proxy Mobile IPv6 indication and discovery; draft-damic-netlmm-pmip6- ind-discover-03.txt" IETF STANDARD-WORKING-DRAFT, INTERNET ENGINEERING TASK FORCE, IETF, CH, no. 3, 25 février 2008 (2008-02-25), pages 1-17, XP015052749 ISSN: 0000-0004

## Description

### 1. Domaine de l'invention

La présente invention se rapporte au domaine des télécommunications. L'invention concerne plus particulièrement les techniques de transfert, ou handoff selon la terminologie anglo-saxonne, entre réseaux d'accès sans fil de différentes technologies utilisant des protocoles dit en mode paquet associés au protocole IP, lors des déplacements d'un terminal. On appelle plus particulièrement ce type de transfert handoff vertical, ou handoff, sachant qu'il concerne un transfert de flux. Le handoff intervient entre deux réseaux d'accès différents, c'est-à-dire entre deux points d'accès de technologies différentes. Selon une représentation classique des réseaux de télécommunication, on distingue le réseau coeur et les réseaux d'accès pour accéder à ce réseau coeur qui relie les réseaux d'accès entre eux, ces différents réseaux utilisant le protocole IP pour le transfert des données.

L'invention se place à l'interface entre une chaîne de décision de handoff associée à une entité de décision et une chaîne d'exécution associée à une entité d'exécution. Ces deux chaînes sont indépendantes, leur mise en oeuvre peut faire intervenir des entités différentes et l'invention détermine un procédé d'interaction entre ces entités. L'invention intervient dans la gestion de la mobilité de terminaux, désignés indistinctement par les termes mobile, terminal mobile ou noeud mobile, et fait intervenir des techniques utilisant des tunnels hiérarchiques.

La gestion de la mobilité dans les réseaux cellulaires est basée principalement sur la gestion du transfert intercellulaire. Ce transfert permet à un terminal mobile de passer de la couverture d'un point d'accès à un autre point d'accès tout en restant joignable. Cette procédure de transfert consiste à demander à un gestionnaire dans le réseau de mettre en place la signalisation nécessaire pour transférer l'appel de l'ancien au nouveau point d'accès. Selon l'invention, le handoff désigne la gestion de la mobilité d'un terminal qui passe de la couverture sans-fil d'un point d'accès à un autre point d'accès de technologie différente. Cependant, l'invention s'applique tout aussi bien dans le cas d'un handoff intra technologie et plus particulièrement entre deux points d'accès sans fil, par exemple de type WiFi, sous-entendu avec des points d'accès connectés à des domaines IP différents. Le changement de point d'accès doit être effectué en assurant une continuité de service.

L'invention s'applique aussi bien à des réseaux de type radio mobile tel que les réseaux GSM, UMTS, HSDPA que de type WIFI ou WIMAX.

### 2. Art antérieur

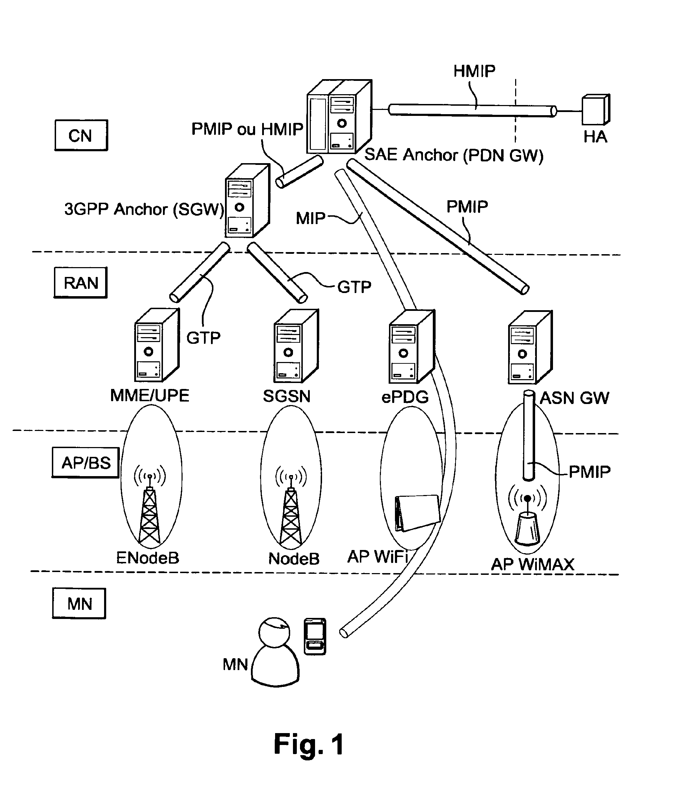

L'évolution des réseaux vers des protocoles basés sur l'IP permet une gestion de la mobilité par des mécanismes IP, tels que Mobile IP(MIP). Ce protocole permet à un mobile de changer son point d'accès dans des domaines IP différents sans changer son adresse IP. Un domaine IP peut être défini comme étant une portion contiguë de l'Internet dont les adresses IP appartiennent à un même sous-réseau. La gestion de la mobilité dans un réseau IP est basée sur la détection du changement de réseau d'accès(dit aussi réseau d'attachement) par le mobile, l'acquisition d'une nouvelle configuration IP par le mobile et l'enregistrement de la nouvelle localisation auprès d'un point central dans le réseau illustré par la figure 1, appelé agent mère HA ou Home Agent selon la terminologie anglo-saxonne. Ce dernier route ensuite les paquets arrivant au réseau d'abonnement, dit encore réseau mère, du mobile vers le réseau visité par le mobile en utilisant une encapsulation IP dans IP. Cependant, le protocole Mobile IP n'étant pas adapté pour des changements fréquents de points d'accès, le choix de séparer macro mobilité et micro mobilité a été proposé. La micro mobilité correspond à des mouvements locaux rapides et fréquents d'un mobile au sein d'un même réseau d'accès IP alors que la macro mobilité correspond aux mouvements d'un terminal avec changement de réseau d'accès IP. Cette séparation permet de réduire le délai de mise à jour de localisation et par conséquent la perte de paquets de données. Plusieurs protocoles ont adopté ce choix ; on peut citer les protocoles HMIP, Cellular IP.

Plus récemment, les opérateurs de télécommunications s'orientent vers un nouveau protocole de mobilité basé sur le même principe que MIP et appelé PMIP (Proxy MIP). PMIP permet la prise en charge de la mobilité d'un terminal par le réseau sans nécessiter l'implication du terminal dans l'échange de la signalisation. Le terminal doit s'identifier auprès de son routeur d'attachement (ou accès) et ce dernier lui "fait croire" qu'il est toujours dans son réseau d'abonnement : le routeur d'attachement s'occupe de la mise à jour de la localisation auprès de l'agent mère et annonce au terminal sa nouvelle route par défaut, qui est typiquement l'adresse IP de la passerelle par défaut ou routeur par défaut.

La gestion de la mobilité dans un contexte de réseaux sans-fil hétérogènes comporte deux étapes majeures :
- la prise de décision du handoff pour basculer d'un point d'accès d'un réseau de technologie A à un autre point d'accès situé dans un réseau de technologie B. Cette prise de décision prend en compte différents paramètres comme les préférences de l'opérateur et de l'utilisateur, les exigences des applications et les capacités des réseaux. La prise de décision de handoff se passe dans le plan de contrôle.
- l'exécution de la décision du handoff pour prendre en charge la mise à jour de localisation (ou l'enregistrement de la nouvelle localisation) de noeud mobile dans le réseau, ainsi que la mise à jour du routage des données utilisateurs et de la signalisation vers et depuis le nouveau point d'accès. L'exécution du handoff prend effet dans le plan de données.

Contrairement aux réseaux de télécommunication classiques, les réseaux IP ont le plan de contrôle et le plan de données confondus ; la signalisation est dans la bande passante. C'est-à-dire que les paquets de données et la signalisation pour l'établissement de la route traversent les mêmes noeuds d'un réseau. En outre, au sein des réseaux IP, c'est généralement la même entité qui prend la décision et exécute le handoff (par exemple, l'exécution du protocole MIP par le noeud mobile) alors qu'au sein des réseaux de télécommunications (réseaux d'opérateurs), l'entité qui prend la décision de handoff est différente de l'entité qui exécute le handoff. Et, dans la majorité des cas, ces entités sont centralisées dans le réseau, leur configuration est fixe dans le réseau et dépend du protocole d'exécution utilisé.

La décision finale et l'exécution finale du handoff peuvent être effectuées selon plusieurs modes de réalisation selon l'endroit où ces fonctionnalités sont implémentées, soit du côté réseau, soit du côté mobile :
mode 1 : contrôle de handoff par le mobile et exécution de handoff dans le mobile. Ce dernier peut maintenir des profils qui prennent en compte des préférences utilisateur/opérateur, les caractéristiques des réseaux d'accès et des applications.
mode 2 : contrôle de handoff par le réseau (par une ou plusieurs entités fonctionnelles du réseau, typiquement au moyen d'un gestionnaire de mobilité ou via une chaîne d'entités de décision) et exécution de handoff dans le mobile
mode 3 : contrôle de handoff par le mobile et exécution de handoff dans le réseau (par une ou plusieurs entités fonctionnelles du réseau)
mode 4 : contrôle de handoff par le réseau (par une ou plusieurs entités fonctionnelles du réseau) et exécution de handoff dans le réseau (par une ou plusieurs entités fonctionnelles du réseau).

La détermination du mode peut se faire de manière dynamique. Ainsi, certains travaux qui se déroulent au sein de l'IETF préconisent que le noeud mobile signale au réseau d'attachement s'il prend en charge l'exécution du handoff par le protocole MIP ou s'il demande au réseau d'effectuer cette exécution par le protocole PMIP. Selon d'autres travaux, le réseau annonce sa capacité d'exécution du handoff par le protocole PMIP et le noeud mobile exprime sa préférence quant à l'utilisation de ce service. Certaines spécifications du 3GPP concernant la nouvelle architecture des réseaux mobiles 3GPP (LTE/SAE) permettent de définir une hiérarchie de tunnels pour la gestion de la mobilité. Plusieurs scénarios de mobilité sont donnés selon qu'on effectue des handoff intra ou inter réseaux d'accès 3GPP ou handoff inter-système 3GPP ou non inter-système 3GPP.

Selon les protocoles de gestion de la mobilité disponibles dans le réseau, une hiérarchie de tunnels peut être constituée de plusieurs tunnels de différents types. Un tunnel est établi pour assurer le bon acheminent de paquets IP entre deux noeuds en passant par des routeurs qui n'ont pas forcément la connaissance du protocole de mobilité respectif associé aux paquets. Le "tunneling", selon la terminologie anglo-saxonne, est le procédé d'encapsulation et de décapsulation d'un paquet IP soit dans un autre paquet IP (par exemple MIP ou PMIP), soit dans un paquet d'un autre type (par exemple GTP). Par exemple et en référence à la figure 1, un mobile est joignable par un tunnel PMIP spécifique jusqu'à son point d'ancrage (dans ce cas, le Serving Gateway SGW) dans le réseau SAE (System Architecture Evolution (i.e., le réseau d'une future génération (dit 4G) selon les orientations du 3GPP)); ensuite il est joignable par un tunnel GTP spécifique jusqu'à son point d'accès au niveau liaison (dans ce cas, l'eNodeB). Un point d'ancrage est le point d'entrée dans le réseau d'accès permettant de connecter le mobile à d'autres réseaux ; le trafic entre le mobile et un noeud d'un autre réseau passe obligatoirement par ce point d'ancrage.

Dans le cas de réseaux hétérogènes, plusieurs modes de décision ou d'exécution de handoff peuvent exister de manière concomitante. Ceci pose en particulier le problème du choix du mode et des entités de décision et d'exécution, lors de la gestion de la mobilité. Récemment, des travaux proposent de ne retenir que deux modes possibles d'exécution de handoff : Proxy MIP par le réseau ou MIP par le terminal, le terminal mobile prenant la décision d'activer un mode ou un autre. Le terminal mobile découvre le support de PMIP par le réseau et peut exprimer son souhait de l'activer ; il n'y a pas de négociation ou de pilotage possible par le réseau quand au choix du protocole d'exécution du handoff. Pour exemple, certaines spécifications retenues au 3GPP combinent l'utilisation de plusieurs protocoles de mobilité mais n'offrent pas le moyen de piloter l'activation d'un protocole ou d'un autre par les entités de plan de contrôle responsables de la prise de décision des handoff.

### 3. Exposé de l'invention

L'invention propose un procédé de transfert de flux entre points d'accès hétérogènes, c'est-à-dire entre points d'accès de différentes technologies, que ces points d'accès appartiennent au même réseau IP ou à des réseaux IP différents, qui permette de piloter automatiquement la mobilité d'un terminal entre ces deux points d'accès sans contrainte sur le choix du protocole de mobilité. L'invention permet notamment une gestion centralisée de la mobilité qui permet au réseau de piloter toute mobilité d'un terminal entre points d'accès hétérogènes.

Ainsi, l'invention a pour objet un procédé de transfert de flux entre un premier point d'accès à un premier réseau d'accès à un réseau coeur de type IP auquel est attaché un terminal, dit réseau courant, et un deuxième point d'accès à un deuxième réseau d'accès au réseau coeur, dit réseau visité, le réseau étant composé des différents réseaux et points d'accès précédents, le flux, d'identifiant F_ID, étant établi entre le terminal et un correspondant, le terminal ayant autant d'identifiants MN_ID que d'interfaces d'accès à des réseaux d'accès de technologies données différentes entre elles, mis en oeuvre par un couple d'entités constitué d'une entité de décision HOD* de transfert et d'une première entité d'exécution HOE*, la première entité d'exécution HOE* convertit un ordre d'exécution de transfert émanant de l'entité de décision en messages d'exécution en tenant compte d'une hiérarchie des entités d'exécution du réseau composée d'au moins une autre entité d'exécution, comprenant au moins l'étape suivante exécutée par l'entité de décision HOD* après prise de décision de transfert pour un couple d'identifiants de flux et de terminal (F_ID, MN_ID) donné :
- envoi d'un ordre d'exécution à la première entité d'exécution HOE*, l'ordre d'exécution contenant au moins les champs composés de l'identifiant de flux, l'identifiant de terminal,
- un identifiant du point d'accès courant, un identifiant du point d'accès visité et un indicateur de sens du flux au niveau du terminal,
   et les étapes suivantes exécutées par la première entité d'exécution HOE* :
- sélection d'un protocole de mobilité parmi les protocoles de mobilité supportés par les entités d'exécution de la hiérarchie associée au réseau,
- sélection dans la hiérarchie d'au moins une entité d'exécution en charge d'exécuter le protocole de mobilité,
- envoi aux entités d'exécution sélectionnées de messages d'exécution respectifs contenant aux moins les champs composés de l'identifiant de flux, l'identifiant de terminal, un indicateur de sens du flux, un identifiant d'une interface réseau à laquelle le protocole de mobilité doit s'appliquer, un indicateur du protocole sélectionné, une adresse du terminal, une adresse de routeur par défaut et deux drapeaux, Acq et LocUpd, pour indiquer à l'entité d'exécution si elle est responsable de l'acquisition d'une adresse de mise à jour du terminal et de la mise à jour de la localisation du terminal.

Le procédé détermine une interface configurable entre une chaîne de décision, constituée des différentes entités de prise de décision du transfert pour un couple d'identifiants (identifiant de terminal, identifiant de flux), et une chaîne d'exécution, constituée des différentes entités d'exécution du transfert pour un terminal donné, mise en oeuvre par des entités qui peuvent être distribuées dans le réseau coeur IP, les réseaux d'accès, les points d'accès et le terminal.

L'indicateur du protocole sélectionné identifie le protocole, il est par exemple positionné à MIP ou PMIP.

L'utilisation conjointe des deux drapeaux permet de piloter l'exécution du transfert soit par le terminal, soit par le, réseau, soit par le terminal et le réseau. Si le drapeau Acq est mis à un, l'entité d'exécution doit acquérir une adresse de mise à jour pour le terminal. Sinon, l'entité d'exécution trouve l'adresse de mise à jour du terminal dans le champ adresse. Si le drapeau LocUpd est mis à un, l'entité d'exécution HOE doit mettre à jour la localisation du terminal : c'est-à-dire que l'entité d'exécution HOE doit informer une autre entité d'exécution HOE (généralement le HOE de niveau supérieur comme l'Agent Mère dans le cas MIP ou le Point d'Ancrage de Mobilité Locale dans le cas PMIP) de la nouvelle adresse pour joindre le terminal MN en utilisant des messages de signalisation du protocole précisé dans le champ de protocole de mobilité. Ceci peut être effectué au moyen d'un message de signalisation du protocole de mobilité. La mise à jour de la localisation du terminal implique typiquement l'établissement d'un tunnel spécifique entre ces deux entités HOE pour router les paquets du et vers le terminal MN. Si le drapeau LocUpd est mis à zéro, cela signifie que la mise à jour de localisation a déjà été effectuée par une autre entité HOE. Les valeurs prises pour les drapeaux peuvent tout aussi bien suivre une autre logique, en particulier la valeur de comparaison peut être choisie égale à zéro et non à un.

Le protocole permet l'acquisition d'une nouvelle configuration IP pour le terminal relative à la nouvelle localisation dans le réseau visité et une mise à jour de la localisation du terminal dans le réseau visité. Si le drapeau Acq est initialisé à zéro, le champ adresse contient l'adresse déjà acquise pour le terminal MN. Sinon, le champ adresse ne contient pas d'adresse.

L'adresse du retour par défaut est le routeur par défaut pour router les paquets de et vers le terminal MN.

Le procédé de transfert conforme à l'invention résout le problème posé. En effet, le procédé de transfert selon l'invention permet de piloter un transfert, en particulier entre des réseaux d'accès hétérogènes puisque le procédé tient compte d'un identifiant de protocole de mobilité. Le procédé permet donc de gérer toute mobilité d'un terminal que celle-ci se déroule au sein d'un même réseau entre des points d'accès de différentes technologies ou qu'elle se déroule entre des points d'accès de deux réseaux de technologies différentes. Il permet de piloter tout protocole de gestion de mobilité.

Selon un mode de réalisation particulier, un procédé de transfert selon l'invention est tel que, si l'indicateur de sens de flux est positionné à entrant et si le protocole PMIP est sélectionné, alors la première entité d'exécution HOE* envoie un message d'exécution du transfert à une entité d'exécution du réseau, et est tel que, si l'indicateur de sens de flux est positionné à sortant et si le protocole PMIP est sélectionné, alors la première l'entité d'exécution HOE* envoie un message d'exécution du transfert à une entité d'exécution du réseau et un message d'exécution de transfert à une entité d'exécution du terminal pour la réorientation des paquets du flux.

Dans le cas de la sélection du protocole Proxy MIP (PMIP), l'utilisation du sens du flux permet d'envoyer au terminal un message d'exécution qui permet au terminal de réorienter les paquets qu'il émet vers l'interface réseau correcte.

Selon un mode de réalisation particulier, un procédé de transfert selon l'invention est tel que, la première entité d'exécution HOE* prend connaissance des protocoles de mobilité supportés par les entités d'exécution de la hiérarchie associée au réseau, suite à une prise de décision de transfert, de manière dynamique par échange de message avec ces entités d'exécution.

Ce mode a pour avantage de limiter les messages de mise à jour de la hiérarchie des entités d'exécution puisque la mise à jour est déclenchée suite à une prise de décision de transfert. Il a en outre pour avantage que la première entité d'exécution sélectionne un protocole de mobilité selon une connaissance d'une hiérarchie à jour ; la sélection ne peut donc porter que sur un protocole de mobile supporté par les entités d'exécution sélectionnées.

Selon un mode de réalisation particulier, un procédé de transfert selon l'invention est tel que, l'entité d'exécution responsable de l'acquisition d'une adresse de mise à jour du terminal et de la mise à jour de la localisation du terminal est localisée dans le réseau et est tel que, la première entité d'exécution HOE* envoie un message d'exécution, après retour d'un acquittement d'exécution par l'entité d'exécution responsable de l'acquisition d'une adresse de mise à jour du terminal et de la mise à jour de la localisation du terminal, à une entité d'exécution du terminal avec les champs adresse de terminal et adresse de routeur par défaut renseignés.

Selon ce mode, bien que les entités d'exécution sélectionnées soient localisées dans le réseau, le procédé envoie néanmoins un message d'exécution à une entité d'exécution du terminal. Ce message a pour avantage de permettre au terminal de savoir s'il est toujours attaché à son réseau courant qui est typiquement son réseau d'abonnement et de l'informer de sa passerelle par défaut. En informant le terminal de sa passerelle par défaut, ceci permet de gagner du temps pour l'exécution du transfert et permet donc de diminuer le risque de perte éventuelle de paquets.

Selon un mode de réalisation particulier, un procédé de transfert selon l'invention est tel que, la première entité d'exécution HOE* est localisée dans le terminal et a connaissance de la hiérarchie des entités d'exécution par une information fournie, suite à une prise de décision de transfert, par une entité du réseau d'accès ayant une connectivité en-dessous d'IP-User, et transmise au terminal par le point d'accès auquel est attaché le terminal.

Ce mode a pour avantage de minimiser l'information transmise au terminal pour l'informer de la hiérarchie des entités d'exécution comparativement à un mode selon lequel l'entité du réseau d'accès ayant une connectivité en-dessous d'IP-User, émet périodiquement cette information à destination du terminal.

L'invention a en outre pour objet un dispositif pour la mise en oeuvre d'un procédé selon l'invention.

Ainsi, un dispositif selon l'invention, destiné à mettre en oeuvre un procédé de transfert de flux entre un premier point d'accès à un premier réseau d'accès à un réseau coeur de type IP auquel est attaché un terminal, dit réseau courant, et un deuxième point d'accès à un deuxième réseau d'accès au réseau coeur, dit réseau visité, le réseau étant composé des différents réseaux et points d'accès précédents, le flux, d'identifiant F_ID, étant établi entre le terminal et un correspondant, le terminal ayant autant d'identifiants MN_ID que d'interfaces d'accès à des réseaux d'accès de technologies données différentes entre elles, comprend un moyen de décision HOD* de transfert et un premier moyen d'exécution HOE*, le premier moyen d'exécution HOE* convertit un ordre d'exécution de transfert émanant du moyen de décision en messages d'exécution en tenant compte d'une hiérarchie de moyens d'exécution du réseau composée d'au moins un autre moyen d'exécution, est tel que :
- le moyen de décision HOD* est apte à envoyer un ordre d'exécution au premier moyen d'exécution HOE*, suite à une prise de décision de transfert pour un couple d'identifiants de flux et de terminal donné, l'ordre d'exécution contenant au moins les champs composés de l'identifiant de flux, l'identifiant de terminal, un identifiant du point d'accès courant, un identifiant du point d'accès visité et un indicateur de sens du flux au niveau du terminal,
- le premier moyen d'exécution HOE* est apte :
   a. à sélectionner un protocole de mobilité parmi les protocoles de mobilité supportés par les moyens d'exécution de la hiérarchie associée au réseau,
   b. à sélectionner dans la hiérarchie au moins un moyen d'exécution HOE en charge d'exécuter le protocole de mobilité et
   c. à envoyer aux moyens d'exécution HOE sélectionnés des messages d'exécution respectifs contenant aux moins les champs composés de l'identifiant de flux, l'identifiant de terminal, un indicateur de sens du flux, un identifiant d'une interface réseau à laquelle le protocole de mobilité doit s'appliquer, un indicateur du protocole sélectionné, une adresse du terminal, une adresse de routeur par défaut et deux drapeaux, Acq et LocUpd, pour indiquer au moyen d'exécution s'il est responsable de l'acquisition d'une adresse de mise à jour du terminal et de la mise à jour de la localisation du terminal.

Selon cet objet, le moyen de décision HOD* et le premier moyen d'exécution HOE* sont co-localisés dans un même dispositif. Ce dispositif est typiquement un routeur. Ce peut tout aussi bien être un autre équipement du réseau ou le mobile lui-même.

L'invention a en outre pour objet un système de télécommunication adapté pour la mise en oeuvre d'un procédé selon l'invention.

Ainsi, un système de télécommunication selon l'invention, comprend un réseau comprenant au moins un réseau coeur de type IP, un premier et un deuxième réseaux d'accès au réseau coeur, un premier point d'accès au premier réseau d'accès auquel est attaché un terminal, dit réseau courant, et un deuxième point d'accès au deuxième réseau d'accès, dit réseau visité, apte à transférer un flux entre le premier point d'accès et le deuxième point d'accès, le flux, d'identifiant F_ID, étant établi entre le terminal et un correspondant, le terminal ayant autant d'identifiants MN_ID que d'interfaces d'accès à des réseaux d'accès de technologies données différentes entre elles, le réseau comprenant en outre un moyen de décision HOD* de transfert et un premier moyen d'exécution HOE*, le premier moyen d'exécution HOE* étant apte à convertir un ordre d'exécution de transfert émanant du moyen de décision en messages d'exécution en tenant compte d'une hiérarchie de moyens d'exécution du réseau composée d'au moins un autre moyen d'exécution (HOE), tel que, après une prise de décision de transfert pour un couple d'identifiants de flux et de terminal donné, le moyen de décision HOD* est apte :
- à envoyer un ordre d'exécution au premier moyen d'exécution HOE*, l'ordre d'exécution contenant au moins les champs composés de l'identifiant de flux, l'identifiant de terminal, un identifiant du point d'accès courant, un identifiant du point d'accès visité et un indicateur de sens du flux au niveau du terminal,
   et tel que, le premier moyen d'exécution HOE* est apte :
- à sélectionner un protocole de mobilité parmi les protocoles de mobilité supportés par les moyens d'exécution de la hiérarchie associée au réseau,
- à sélectionner dans la hiérarchie au moins un moyen d'exécution en charge d'exécuter le protocole de mobilité,
- à envoyer aux moyens d'exécution sélectionnés des messages d'exécution respectifs contenant aux moins les champs composés de l'identifiant de flux, l'identifiant de terminal, un indicateur de sens du flux, un identifiant d'une interface réseau à laquelle le protocole de mobilité doit s'appliquer, un indicateur du protocole sélectionné, une adresse du terminal, une adresse de routeur par défaut (Default Route) et deux drapeaux, Acq et LocUpd, pour indiquer au moyen d'exécution s'il est responsable de l'acquisition d'une adresse de mise à jour du terminal et de la mise à jour de la localisation du terminal.

L'invention a en outre pour objet un dispositif d'exécution apte à piloter l'exécution du transfert.

Ainsi, un dispositif d'exécution HOE* selon l'invention, destiné à un système de télécommunication comprenant un réseau comprenant au moins un réseau coeur de type IP, un premier et un deuxième réseaux d'accès au réseau coeur, un premier point d'accès au premier réseau d'accès auquel est attaché un terminal, dit réseau courant, et un deuxième point d'accès au deuxième réseau d'accès, dit réseau visité, le système étant apte à transférer un flux entre le premier point d'accès et le deuxième point d'accès, le flux, d'identifiant F_ID, étant établi entre le terminal et un correspondant, le terminal ayant autant d'identifiants MN_ID que d'interfaces d'accès à des réseaux d'accès de technologies données différentes entre elles, le réseau comprenant en outre un moyen de décision HOD* de transfert, est apte :
- à convertir un ordre d'exécution de transfert émanant du moyen de décision HOD* en messages d'exécution en tenant compte d'une hiérarchie de moyens d'exécution du réseau courant composée d'au moins un autre moyen d'exécution HOE,
- à sélectionner un protocole de mobilité parmi les protocoles de mobilité supportés par les moyens d'exécution de la hiérarchie associée au réseau,
- à sélectionner dans la hiérarchie au moins un moyen d'exécution (HOE) en charge d'exécuter le protocole de mobilité et
- à envoyer aux moyens d'exécution sélectionnés des messages d'exécution respectifs contenant aux moins les champs composés de l'identifiant de flux, l'identifiant de terminal, un indicateur de sens du flux, un identifiant d'une interface réseau à laquelle le protocole de mobilité doit s'appliquer, un indicateur du protocole sélectionné, une adresse du terminal, une adresse de routeur par défaut et deux drapeaux, Acq et LocUpd, pour indiquer au moyen d'exécution s'il est responsable de l'acquisition d'une adresse de mise à jour du terminal et de la mise à jour de la localisation du terminal.

Selon une implémentation préférée, les étapes du procédé de transfert sont déterminées par les instructions d'un programme de transfert incorporé dans un circuit électronique telle une puce elle-même pouvant être disposée dans un dispositif électronique tel un routeur localisé dans le réseau. Le procédé de transfert selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

### 4. Liste des figures

D'autres caractéristiques et avantages de l'invention apparaîtront lors de la description qui suit faite en regard de figures annexées données à titre d'exemples non limitatifs.
La figure 1 est un schéma illustrant une architecture hétérogène d'un réseau constitué d'un réseau coeur, de plusieurs réseaux d'accès et de points d'accès mettant en oeuvre plusieurs protocoles de mobilité selon l'art antérieur.
La figure 2 est un schéma illustrant une architecture hétérogène avec plusieurs réseaux d'accès pour l'exécution d'un procédé selon l'invention.
La figure 3 est un organigramme d'une réalisation d'un procédé selon l'invention.
La figure 4 est un organigramme illustrant l'influence de l'indicateur de sens du flux contenu dans le message d'ordre d'exécution HO_Decision, dans le cas des protocoles MIP et PMIP.
La figure 5 illustre l'utilisation des deux drapeaux Acq et LocUpd d'un message d'exécution de handoff pour la détermination du pilotage de l'exécution du handoff.
Les figures 6 à 9 illustrent différents scénarios de mise en oeuvre d'un procédé selon l'invention.
La figure 10 est un schéma illustrant une architecture hétérogène d'un système de télécommunication comprenant un réseau comprenant un réseau coeur, plusieurs réseaux d'accès, plusieurs points d'accès mettant en oeuvre plusieurs protocoles de mobilité, architecture sur laquelle ont été indiquées les différentes entités des chaînes de décision et d'exécution, selon un mode particulier de réalisation d'un système selon l'invention.

### 5. Description d'un mode de réalisation de l'invention

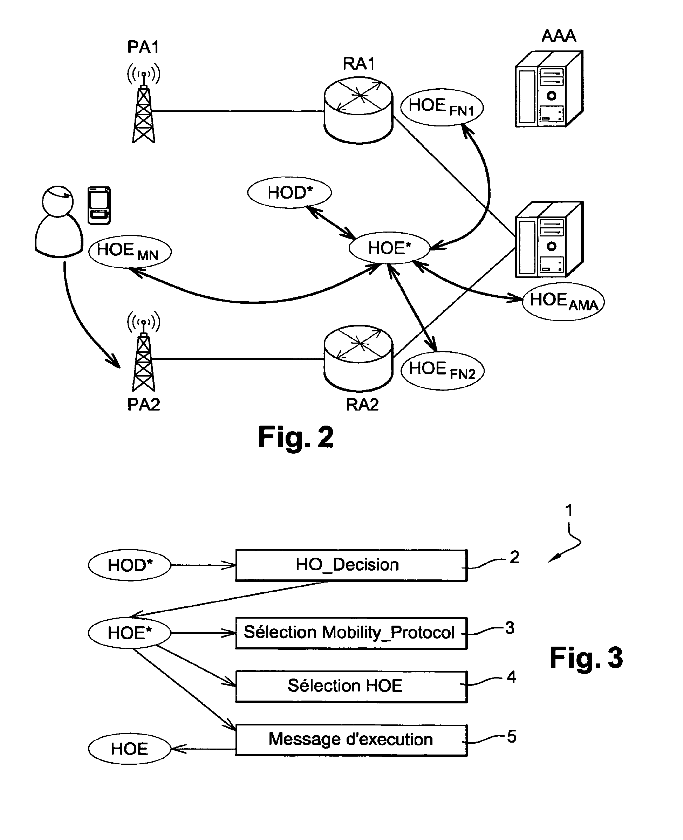

La figure 2 est un schéma illustrant une architecture hétérogène avec plusieurs réseaux d'accès pour une mise en oeuvre d'un procédé selon l'invention.

Le réseau comprend un réseau coeur, des réseaux d'accès, des points d'accès à ces réseaux.

Un premier réseau d'accès comprend un routeur d'accès RA1 dont dépend le point d'accès PA1.

Un second réseau d'accès comprend un routeur d'accès RA2 dont dépend le point d'accès PA2.

Un mobile MN, dit noeud mobile ou terminal mobile, dispose d'au moins deux interfaces d'accès de technologies sans fil différentes. Le mobile MN ne change pas d'identifiant d'origine (par exemple, l'adresse IP de réseau d'abonnement) lorsqu'il change de point d'accès d'un réseau d'accès IP à un autre. Selon l'invention, l'entité MN est associée à un identifiant unique MN's User ID. Selon l'illustration, le mobile garde le même identifiant d'origine lors du changement du point d'accès PA 1 au point d'accès PA2.

Une entité AMA joue le rôle de point d'ancrage de la connexion IP du noeud mobile MN dans le réseau et garde la trace de la localisation du noeud mobile. Cette entité peut être localisée dans le réseau d'origine ou réseau d'abonnement dit encore réseau courant, accessible selon l'exemple par le point d'accès PA1, ou dans un réseau visité par le mobile, réseau visité accessible selon l'exemple par PA2. Il peut y avoir plusieurs entités AMA dans le réseau, chaque entité est associée à un niveau dans le réseau. Un AMA de niveau i est labellisé AMAᵢ. Un noeud AMAᵢ renvoie les paquets adressés au noeud mobile à l'entité AMA de niveau inférieur dans la hiérarchie (c'est-à-dire, AMAᵢ₋₁). Le noeud AMA le plus bas dans la hiérarchie renvoie les paquets des flux associés au mobile vers une entité de transfert FN qui assure la liaison en-dessous d'IP-User avec le mobile.

Une entité de transfert FN est une entité dans un réseau d'accès qui maintient une connectivité en dessous d'IP-user entre un point d'ancrage AMA et un noeud mobile MN. Chaque entité de transfert FN dépend donc d'une entité AMA. Il peut être envisagé qu'un autre protocole que IP soit utilisé pour assurer la connectivité réseau (i.e. la liaison en dessous d'IP-User) entre le terminal et son premier point de connectivité au réseau de transport. Généralement, cette entité FN est localisée dans le routeur d'accès de la technologie sans-fil considérée (par exemple, l'ePDG dans le cas d'un réseau d'accès WiFi) ou au bout d'un tunnel de niveau IP-transport (par exemple, le SGSN dans le cas d'un réseau d'accès UMTS). Au minimum, il doit y avoir une entité FN par technologie d'accès. Dans un réseau cellulaire tel que UMTS, le protocole IP est présent dans deux niveaux : un niveau IP-transport pour assurer une connectivité IP (par le protocole GTP) entre le GGSN et le SGSN ; et un niveau IP-user des couches supérieures entre le GGSN et le terminal mobile. Pour la gestion de la mobilité IP c'est le niveau IP-user qui est utilisé.

Selon l'exemple, la chaîne de décision du handoff comprend pour un couple d'identifiants de mobile et de flux (MN's User ID, flux applicatif ID), au moins une entité HOD* qui prend la décision finale du handoff ; cette décision finale est envoyée sous la forme d'un message d'ordre vers la chaîne d'exécution et plus précisément au point d'entrée dans cette chaîne qui est l'entité HOE*.

Cette entité HOE* déclenche et pilote l'exécution du handoff après avoir reçu le message d'ordre précédent. Cette entité HOE* est localisée, selon l'exemple, dans le réseau. Elle peut tout aussi bien être localisée dans le terminal. La chaîne d'exécution comprend une hiérarchie d'entités HOE d'exécution comprenant au moins une entité HOE qui convertit ce message d'ordre en messages du protocole d'exécution choisi. Ce choix est typiquement fait en fonction d'un choix de paramètres du réseau fait par l'opérateur de ce réseau. L'entité HOE* connait les capacités d'exécution des entités HOE, en particulier les protocoles de mobilité implémentés par les entités HOE. Ces entités d'exécution sont implémentées sous forme de point d'ancrage AMA, d'entité de transfert FN et/ou de mobile MN. Selon l'exemple, ces entités sont implémentées sous la forme d'un point d'ancrage AMA, de deux entités de transfert FN et du mobile MN.

La figure 3 est un organigramme d'une réalisation d'un procédé selon l'invention mis en oeuvre par une architecture telle qu'illustrée par la figure 2.

Le procédé 1 transfert un flux entre un premier point d'accès PA1 d'un premier réseau auquel est attaché (ou ancré) le terminal MN, dit réseau courant, et un second point d'accès PA2 d'un second réseau, dit réseau visité. Le réseau courant est typiquement le réseau d'abonnement. Le flux, d'identifiant F_ID, est établi entre le terminal MN et un correspondant relié au réseau, non représenté sur les figures. Le terminal MN a autant d'identifiants MN_ID que d'interfaces d'accès à des réseaux d'accès de technologies données différentes entre elles. Selon l'exemple de la figure 2, le terminal MN a au moins deux interfaces d'accès correspondant respectivement aux réseaux d'accès 1 et 2.

Le procédé 1 est mis en oeuvre par un couple d'entités constitué d'une entité de décision HOD* de transfert et d'une première entité d'exécution HOE*.

Quand une entité de décision HOD* prend une décision de handoff concernant un couple d'identifiants de mobile et de flux (MN's User ID, Flow ID), elle consulte une base des capacités d'exécution du réseau pour connaître l'entité HOE* qui est le point d'entrée dans la chaîne d'exécution et qui prend en charge la mobilité du terminal. L'entité HOE* peut être localisée dans le terminal ou dans le réseau. Typiquement, l'entité HOD* est préconfigurée avec l'adresse de l'entité HOE*, donc cette base est généralement localisée avec cette entité HOD*. Cependant, la base des capacités d'exécution peut tout aussi bien être dans le HLR, dans le HSS, etc...

La première entité d'exécution HOE* convertit un ordre d'exécution de transfert émanant de l'entité de décision HOD* en messages d'exécution en tenant compte d'une hiérarchie des entités d'exécution du réseau courant composée d'au moins une autre entité d'exécution HOE.

Le procédé 1 comprend au moins les étapes suivantes 2, 3, 4, 5.

L'étape 2 est exécutée par l'entité de décision HOD* après la prise de décision de transfert pour un couple d'identifiants de flux et de terminal, F_ID, MN_ID, donné. Cette étape consiste en l'envoi 2 d'un ordre d'exécution, HO_Decision, à la première entité d'exécution HOE*. L'ordre d'exécution contient au moins les champs composés de : l'identifiant de flux, F_ID, l'identifiant de terminal, MN_ID, un identifiant du point d'accès courant, un identifiant du point d'accès visité et un indicateur de sens du flux au niveau du terminal (le flux est soit entrant, soit sortant au niveau du terminal), Flow direction.

Les étapes suivantes 3, 4, 5 sont exécutées par la première entité d'exécution HOE*.

L'étape 3 consiste en la sélection 3 d'un protocole de mobilité parmi les protocoles de mobilité supportés par les entités d'exécution HOE de la hiérarchie associée au réseau courant. La première entité HOE* connaît la hiérarchie et les capacités d'exécution des entités HOE. L'entité HOE* doit sélectionner parmi les capacités d'exécution, le protocole de mobilité à appliquer.

L'étape 4 consiste en la sélection 4 dans la hiérarchie d'au moins une entité d'exécution HOE dans le réseau et/ou le terminal en charge d'exécuter le protocole de mobilité sélectionné.

L'étape 5 consiste en l'envoi 5 aux entités d'exécution HOE sélectionnées de messages d'exécution respectifs contenant aux moins les champs composés de : l'identifiant de terminal, MN_ID, l'identifiant de flux, F_ID, un indicateur de sens du flux, Flow_direction, un identifiant d'une interface réseau, Interface ID, à laquelle le protocole de mobilité doit s'appliquer et sur laquelle le flux doit être envoyé, un indicateur du protocole sélectionné, Mobility_Protocol, une adresse du terminal pour la mise à jour de la localisation, Acquired Address, une adresse de routeur par défaut, Default Route, et deux drapeaux pour indiquer à l'entité d'exécution si elle est responsable de l'acquisition d'une adresse de mise à jour du terminal, Acq et de la mise à jour de la localisation du terminal, LocUpd.

Par exemple, deux options sont possibles :
- si la première entité HOE* a choisi d'activer une exécution par le mobile MN, alors elle envoie le message d'exécution de handoff à l'entité HOE localisée dans le mobile MN,
- si la première entité HOE* a choisi d'activer une exécution par le réseau, alors elle envoie le message d'exécution de handoff à une entité HOE localisée dans le réseau (par exemple, le routeur d'accès servant le nouveau point d'accès).

Un message d'exécution de handoff indique au noeud HOE qui le reçoit le protocole de mobilité à activer et s'il est responsable de l'acquisition d'une nouvelle adresse et/ou de la mise à jour de la localisation pour le mobile MN. Pour piloter cette exécution du handoff, trois champs Mobility Protocol, Acquired Address et Default Route, ainsi que deux drapeaux Acq et LocUpd, sont utilisés. L'acquisition d'adresse et la mise à jour de la localisation doivent être effectuées selon le protocole de mobilité à appliquer.

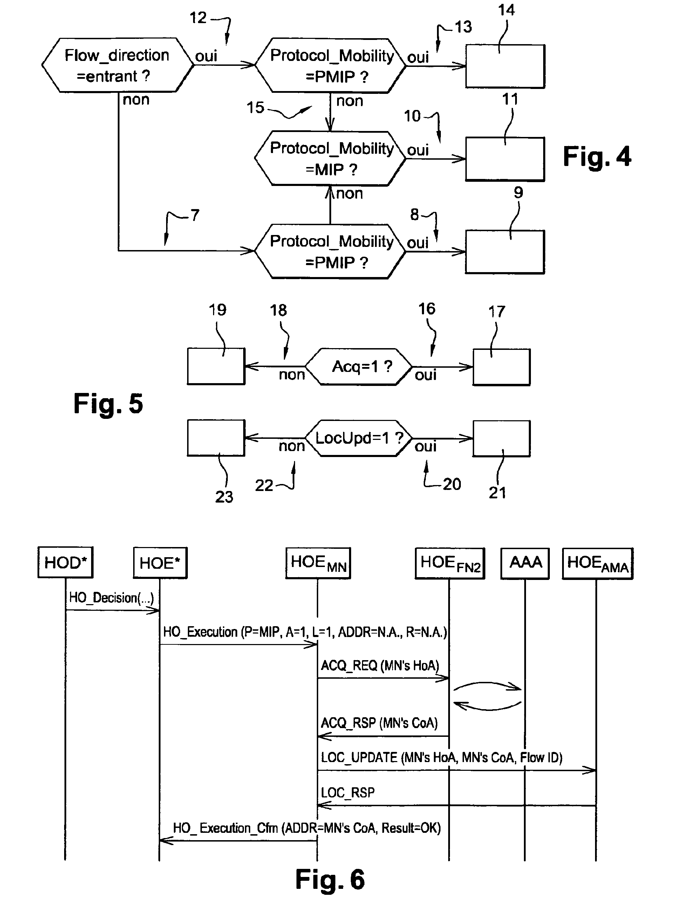

La figure 4 illustre l'influence de l'indicateur de sens du flux contenu dans le message d'ordre d'exécution HO_Decision, dans le cas des protocoles MIP et PMIP. Le champ Protocol_Mobility est le même champ que celui désigné par Mobility_Protocol.

Dans le cas 7 d'un flux sortant et d'une exécution 8 avec le protocole PMIP, la première entité d'exécution HOE* doit envoyer 9 à la fois un message d'exécution de handoff à des entités HOE dans le réseau et un message d'exécution du handoff au HOE du mobile MN pour permette l'aiguillage des paquets de ce flux sortant de MN vers la bonne interface réseau du mobile. Si le protocole d'exécution est MIP 10 alors la première entité d'exécution HOE* doit n'envoyer 11 qu'un message d'exécution du handoff au HOE du mobile MN. Dans le cas du protocole MIP, le terminal seul doit mettre à jour sa localisation auprès de son point d'ancrage. Dans le cas PMIP, c'est une entité réseau qui met à jour la localisation, mais le terminal aussi doit être informé pour qu'il puisse aiguiller les flux sortants ; l'ensemble de ces messages rend possible l'exécution complète du handoff IP.

Dans le cas 12 d'un flux entrant et si l'exécution doit se faire avec le protocole PMIP 13, alors la première entité d'exécution HOE* doit n'envoyer 14 qu'un message d'exécution du handoff à un HOE du réseau. Une fois la décision prise de passer d'un point d'accès WiFi vers un point d'accès WiMAX, l'architecture réseau déployée impose à la première entité d'exécution HOE* d'envoyer le message d'exécution à un HOE déterminé en fonction du paramétrage de cette architecture, par exemple ASN GW. Sinon 15 et si l'exécution doit se faire avec le protocole MIP, alors la première entité d'exécution HOE* envoie 11 un ordre d'exécution du handoff au HOE du mobile.

Selon un mode de réalisation préféré, un message d'exécution HO_Execution est acquitté par un message de confirmation HO_Execution_Cfm qui contient le résultat de l'exécution (OK/NOK) et l'adresse, Acquired Address, à utiliser pour la mise à jour de la localisation (si HO_Execution a le drapeau Acq positionné à 1) : en utilisant les deux drapeaux Acq et LocUpd, l'exécution du handoff peut être pilotée soit par le terminal, soit par le réseau, soit par le terminal et le réseau. Le message d'acquittement HO_Execution_Cfm contient aux moins les champs composés de : l'identifiant de flux, F_ID, l'identifiant de terminal, MN_ID, l'indicateur de sens du flux, Flow_direction, l'adresse du terminal, Acquired Address, et le résultat, Result.

Selon un mode de réalisation préféré, le pilotage et l'exécution du handoff sont effectués au moyen des trois messages décrits précédemment, ainsi que de quatre messages génériques :
HO_Decision : message d'ordre de handoff tel que décrit précédemment.
HO_Execution : message d'exécution du handoff tel que décrit précédemment

HO_Execution_Cfm : message de confirmation de l'exécution du handoff tel que décrit précédemment.

ACQ_REQ : ce message permet de demander une adresse pour le mobile MN. Par exemple, ce message est l'équivalent de Router Solicitation des protocoles IP.

ACQ_RSP : ce message est utilisé pour délivrer la nouvelle adresse pour le mobile MN. Ce message est, par exemple, l'équivalent de Router Advertisement des protocoles IP.

LOC_UPDATE : ce message permet la mise à jour de la localisation du mobile MN auprès de l'entité AMA. Par exemple, ce message est l'équivalent de Binding Update des protocoles de mobilité IP.

LOC_RSP : permet de confirmer la mise à jour de la localisation de MN. Par exemple, ce message est l'équivalent de Binding Ack des protocoles de mobilité IP.

La figure 5 illustre l'utilisation des deux drapeaux Acq et LocUpd d'un message d'exécution de handoff pour la détermination du pilotage de l'exécution du handoff.

Si le drapeau Acq est mis à un 16 alors l'entité HOE doit acquérir 17 une nouvelle adresse pour la mise à jour de la localisation du mobile MN. Sinon 18, l'entité HOE trouve 19 la nouvelle adresse du mobile MN dans le champ d'adresse Acquired_Address.

Si le drapeau LocUpd est à un 20, alors l'entité HOE doit mettre 21 à jour la localisation du mobile auprès d'une autre entité HOE au moyen d'un message de signalisation du protocole sélectionné, Mobility_Protocol. Sinon 22, l'entité HOE est informé 23 qu'elle n'est pas en charge de la mise à jour de la localisation du mobile MN.

Il existe différents scénarios de mise en oeuvre d'un procédé selon l'invention illustrés par les figures 6 à 9. Sur les figures les notations suivantes ont été utilisées : les champs Mobility_Protocol, Acq, LocUpd, Acquired Address et Default Route sont abrégés respectivement en P, A, L, ADDR, et R. L'exécution du handoff peut se faire avec ou sans l'implication du terminal mobile.

Dans le cas où le terminal est impliqué dans l'exécution du handoff, on peut distinguer trois scénarios différents.

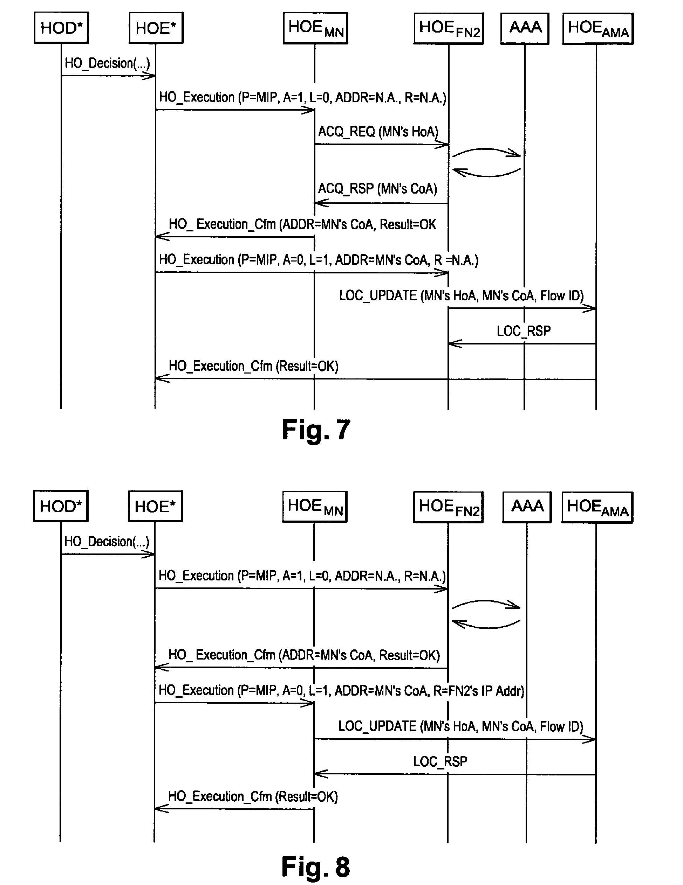

Scénario 1 illustré par la figure 6 : le protocole de l'exécution du handoff est complètement mis en oeuvre par le mobile MN (i.e., l'acquisition d'adresse et la mise à jour de localisation). Selon l'illustration, les entités HOE_{FN2} et AAA (serveur d'authentification et d'autorisation, selon la terminologie anglo saxonne : Authentication, Authorization, and Accounting) n'exécutent pas de fonction spécifique au procédé selon l'invention. Scénario 2 illustré par la figure 7 : l'acquisition d'adresse est effectuée par le mobile MN et la mise à jour de localisation est exécutée par le réseau. L'adresse MN's CoA récupérée lors de l'acquisition d'adresse par l'entité HOE_{MN} est utilisée ensuite pour la mise à jour de la localisation par l'entité HOE_{FN2}. Selon l'illustration, l'entité AAA n'exécute pas de fonction spécifique au procédé selon l'invention. Scénario 3 illustré par la figure 8 : l'acquisition d'adresse est effectuée par le réseau et la mise à jour de localisation est exécutée par le mobile MN. Selon l'illustration, l'entité AAA n'exécute pas de fonction spécifique au procédé selon l'invention.

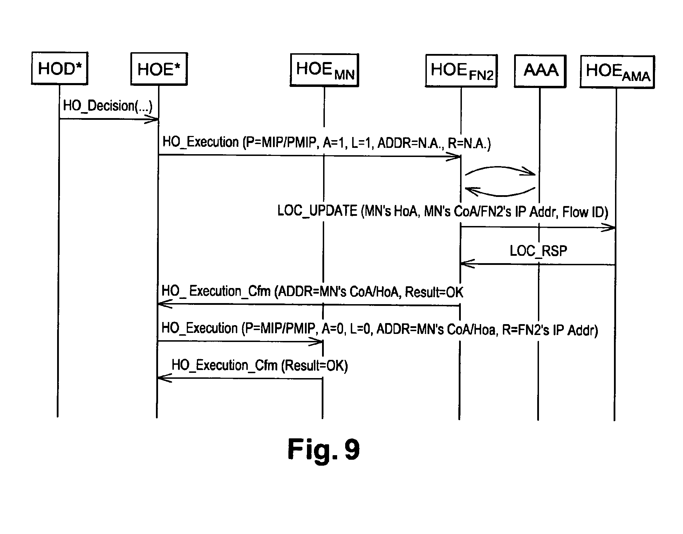

Dans le cas où le terminal n'est pas impliqué dans l'exécution du handoff, le scénario suivant illustré par la figure 9 donne la preuve de pilotage de l'exécution du handoff par le réseau. L'acquisition d'adresse, ainsi que la mise à jour de la localisation, sont effectuées par le réseau. Le message HO_Execution envoyé au mobile MN permet de l'informer s'il est toujours dans son réseau d'abonnement (home) (cas PMIP) ou pas (cas MIP) et, éventuellement, de lui annoncer sa passerelle par défaut. Le message HO_Execution envoyé au mobile MN est l'équivalent d'un message Router Advertisement des protocoles IP. Selon l'illustration, l'entité AAA n'exécute pas de fonction spécifique au procédé selon l'invention.

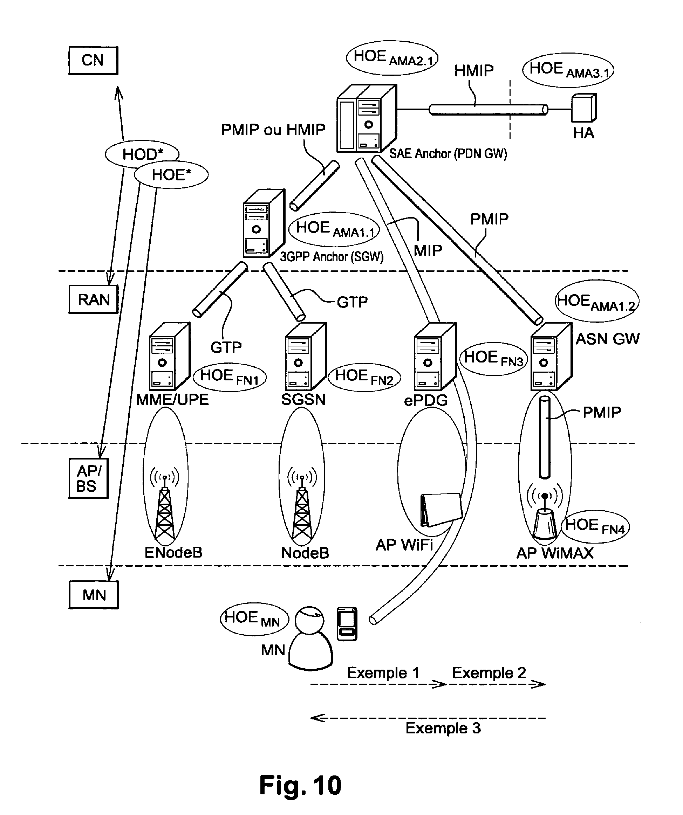

La figure 10 est un schéma illustrant une architecture hétérogène d'un système de télécommunication comprenant un réseau comprenant un réseau coeur, plusieurs réseaux d'accès et plusieurs points d'accès mettant en oeuvre plusieurs protocoles de mobilité, architecture sur laquelle ont été indiquées les différentes entités des chaînes de décision et d'exécution, selon un mode particulier de réalisation d'un système selon l'invention. L'architecture est répartie entre quatre niveaux : un niveau réseau coeur CN (ou core network), un niveau réseau d'accès RAN (ou radio access network), un niveau point d'accès radio AP (ou access point), un niveau mobile MN (ou mobile node).

Les protocoles de mobilité qui coexistent au sein de cette architecture illustrée sont MIP, PMIP, HMIP, et GTP.

Les différentes entités HOE* et HOE de la chaîne d'exécution du handoff peuvent être réparties sur plusieurs niveaux. Selon l'illustration, elles sont réparties sur les quatre niveaux : réseau coeur CN, réseau d'accès RAN, points d'accès AP/BS, mobile MN.

L'entité HOE* peut être implantée soit dans le réseau, soit dans le terminal. Une entité HOE dans le réseau est capable de communiquer avec n'importe quelle autre entité HOE de même niveau ou d'un niveau différent.

L'invention se place dans un contexte où l'entité HOE* a connaissance de la hiérarchie des entités HOE distribuées et implantées dans le réseau et où la chaîne d'exécution comprend au minimum deux entités : une première entité d'exécution HOE* qui reçoit l'ordre de handoff de la chaîne de décision et une entité HOE qui convertit cet ordre en messages du protocole d'exécution choisi. Cette connaissance peut être acquise au moyen d'annonces périodiques de la hiérarchie des entités HOE (AMA) dans le réseau ou bien les entités HOE sont configurées avec la liste des entités HOE supérieures dans la hiérarchie. L'entité HOE* pouvant être localisée dans le mobile MN, il faut annoncer également la hiérarchie des HOE aux mobiles MNs. Pour cela, chaque FN annonce la hiérarchie des entités HOE (AMA, FN) aux mobiles MNs avec l'ordre de handoff ou périodiquement dans le réseau. Ces annonces sont retransmises par les points d'accès.

L'entité HOE* connaît en outre les capacités d'exécution des entités HOE et donc sait quels sont les protocoles de mobilité implémentés par les entités HOE. Cette connaissance peut être acquise d'une façon statique (une fois pour toute pour le système considéré) ou d'une façon dynamique (par exemple à chaque fois qu'un mobile doit être géré par une entité HOE). Dans le cas statique, il doit exister un mécanisme de mise à jour et d'annonce des capacités d'exécution dans le réseau. Dans le cas dynamique, la première entité HOE* peut utiliser un premier message de requête pour demander les capacités d'exécution. Le noeud HOE répond avec un deuxième message qui contient la liste des protocoles de mobilité qu'il supporte.

Dans un système de réseaux hétérogènes, un mobile MN disposant d'accès à plusieurs réseaux de technologie différente peut posséder plusieurs identifiants, par exemple : MN's User ID, MN's NAI (Network Access Identifier), MN's HoA (Home Address). Cependant le mobile MN doit être connu avec un seul identifiant par le réseau. Une fois que le mobile se présente dans le réseau avec cet identifiant il faut que le réseau soit capable de convertir cet identifiant en un autre identifiant nécessaire à l'exécution d'un protocole de mobilité.

L'apprentissage de l'identifiant du mobile peut intervenir à chaque fois avant la prise de décision : une entité HOD demande au mobile MN ses identifiants. Un autre mécanisme peut être de faire circuler l'identifiant initial du mobile MN avec les messages de décision et lors de l'exécution. Il y a alors une recherche du bon identifiant du mobile pour l'exécution auprès d'un serveur de type AAA. Par exemple, un MN est identifié tout au long du processus de décision par MN's User-ID. Avant de demander à une entité HOE d'exécuter le protocole PMIP, il faut convertir le MN's User-ID en un MN's NAI (Network Access Identifier, identifiant utilisé par le protocole PMIP) en interrogeant une base de données dans le réseau. Dans le cas d'exécution en cascade de protocoles d'exécution, l'identifiant récupéré lors de la 1^{er} exécution est utilisé lors de la 2^{ème} exécution.

Les trois exemples suivants illustrés par la figure 10 permettent d'illustrer la mise en oeuvre d'un procédé selon l'invention dans trois cas particulier de handoff entre réseaux d'accès hétérogènes. Le premier exemple est relatif à un basculement d'un réseau UMTS à un réseau Wi-Fi. Le deuxième exemple est relatif au basculement d'un réseau WiFi à un réseau WiMAX. Le troisième exemple est relatif au basculement d'un réseau WiMAX à un réseau UMTS.

### Exemple 1: basculement d'un réseau UMTS à un réseau Wi-Fi

Une décision de handoff est prise par l'entité HOD* pour basculer le trafic du mobile MN d'un point d'accès NodeB du réseau UMTS vers un point d'accès AP WiFi du réseau WiFi. Deux scénarios sont possibles : l'exécution est mise en oeuvre par le mobile ou par le réseau.

### Scénario 1, exécution par le mobile MN :

Contexte de mise en oeuvre :
HOE* est co-localisé avec HOD* (ces deux entités peuvent être déployées soit dans le réseau coeur CN, le réseau d'accès RAN, les points d'accès APBS ou le mobile MN).
HOE* a connaissance que le NodeB est sous le contrôle de HOE_{FN2}, HOE_{AMA1.1} HOE_{AMA2.1}.
HOE* a connaissance que l'AP WiFi est sous le contrôle de HOE_{FN3}, HOE_{AMA2.1}. -
   a) Découverte des capacités d'exécution du noeud FN qui va gérer le mobile MN :
      HOE* → HOE_{FN3}: HOE_CTX_REQ
      HOE_{FN3} → HOE* : HOE_CTX_RSP (ici le FN3 répond qu'il n'a pas de capacité à exécuter aucun protocole de mobilité)
   b) Sélection du protocole d'exécution :
      HOE* sait que par défaut le mobile MN implémente le protocole MIP. Sinon HOE* doit demander au mobile MN ses capacités d'exécution, comme suit :
      HOE* → HOE_{MN} : HOE_CTX_REQ
      HOE_{MN} → HOE* : HOE_CTX_RSP (MIP)
   c) Envoi du message d'exécution complète du handoff au mobile MN :
      Un seul noeud est désigné pour exécuter la mobilité MIP, ici le mobile MN :
      HOE* → HOE_{MN} : HO_Execution (MN's User ID, Flow ID, Flow Direction, Interface ID, protocol=MIP, Acq=1, LocUpd=1, Acquired Address=N.A., Default Route=N.A.) HOE_{MN} → HOE* : HO_Execution_Cfm (MN's CoA, Result=OK) envoyé après l'exécution de handoff
   d) Exécution du handoff par le mobile MN :
      HOE_{MN} → HOE_{FN3}: ACQ_REQ (MN's HoA)
      HOE_{FN3} → HOE_{MN} : ACQ_RSP (MN's CoA)
      HOE_{MN} → HOE_{AMA2.1} : LOC_UPDATE (MN's HoA, MN's CoA, Flow ID)
      HOE_{AMA2.1} → HOE_{MN}: LOC_RSP

### Scénario 2. exécution par le Réseau :

Contexte de mise en oeuvre :
   HOE* est co-localisé avec HOD* (ces deux entités peuvent être déployées soit dans le réseau coeur CN, le réseau d'accès RAN, les points d'accès AP/BS ou le mobile MN).
   HOE* sait que le NodeB est sous le contrôle de HOE_{FN2}, HOE_{AMA1.1} , HOE_{AMA2.1}.
   HOE* sait que l'AP WiFi est sous le contrôle de HOE_{FN3}, HOE_{AMA2.1}.
   HOE* connaît l'identifiant MN's HoA, sinon il demande les identifiants au mobile MN ou à un serveur AAA.
      a) Découverte des capacités du noeud FN qui va gérer le MN :
         HOE* → HOE_{FN3}: HOE_CTX_REQ
         HOE_{FN3} → HOE* : HOE_CTX_RSP (ici le FN3 répond qu'il n'a pas de capacité à exécuter aucun protocole de mobilité).
      b) Sélection du protocole d'exécution :
         HOE* choisit d'exécuter le protocole MIP pour le mobile MN.
      c) Acquisition d'adresse pour le mobile MN :
         HOE* → HOE_{FN3} : HO_Execution (MN's User ID, Flow ID, Flow Direction, Interface ID, Protocol=MIP, Acq=1, LocUpd=1, Acquired Address=N.A., Default Route=N.A.) HOE_{FN3} acquiert une adresse CoA pour le MN
         HOE_{FN3} → HOE* : HO_Execution_Cfm (MN's CoA, Result=OK)
      d) Mise à jour de la localisation par le réseau pour le mobile MN :
         HOE_{FN3} → HOE_{AMA2.1} : LOC_UPDATE (MN's HoA, MN's CoA, Flow ID)
         HOE_{AMA2.1} → HOE_{FN3}: LOC_RSP
      e) Annonce d'adresse au mobile MN par un message d'exécution de handoff :
         HOE* donne au mobile MN sa nouvelle adresse CoA pour qu'il puisse configurer son interface avec cette adresse et découvrir sa passerelle par défaut ; ceci permet en outre au mobile MN de se préparer à décapsuler les paquets IP pour les flux entrants et d'aiguiller les flux sortants sur l'interface spécifiée.
         HOE* → HOE_{MN} : HO_Execution (MN's User ID, Flow ID, Flow Direction, Interface ID, Protocol=MIP_by_Net, Acq=0, LocUpd=0, Acquired Address=MN's CoA, Default Route=FN3's IP Addr)

### Exemple 2 : basculement d'un réseau réseau WiFi à un réseau WiMAX

Une décision de handoff est prise par l'entité HOD* pour basculer le trafic du mobile MN d'un point d'accès AP WiFi vers un point d'accès AP WiMAX.

Contexte de mise en oeuvre :
HOE* est co-localisé avec HOD* (ces deux entités peuvent être déployées soit dans le réseau coeur CN, le réseau d'accès RAN, les points d'accès APBS ou le mobile MN).
HOE* a connaissance que l'AP WiFi est sous le contrôle de HOE_{FN3}, HOE_{AMA2.1}
HOE* a connaissance que l'AP WiMAX est sous le contrôle de HOE_{FN4}, HOE_{AMA1.2},
HOE_{AMA2.1}
HOE_{FN4} sait qu'il est sous le contrôle de HOE_{AMA1.2}
HOE_{AMA1.2} sait qu'il est sous le contrôle de HOE_{AMA2.1}
HOE* connaît l'identifiant MN's NAI, sinon elle demande les identifiants au mobile MN ou à un serveur AAA.

Scénario d'exécution :
a) Découverte des capacités des Noeuds (FN, AMA) :
   HOE* → HOE_{FN4}: HOE_CTX_REQ
   HOE_{FN4} → HOE* : HOE_CTX_RSP (ici le FN4 répond qu'il peut faire du PMIP)
   Comme le HOE_{FN4} et l'ancien HOE_{FN3} ne sont pas contrôlées par le même AMA, le HOE* demande la capacité d'AMA supérieur hiérarchique de HOE_{FN4} (i.e., HOE_{AMA1.2})
   HOE* → HOE_{AMA1.2}: HOE_CTX_REQ
   HOE_{AMA1.2} → HOE* : HOE_CTX_RSP (ici le AMA_{1,2} répond qu'il peut faire du PMIP) Comme le HOE_{AMA1.2} et le HOE_{FN3} sont contrôlées par le même AMA (i.e., HOE_{AMA2.1}), le HOE* n'émet pas d'autre requête de demande de capacité.
b) Sélection du protocole d'exécution :
   HOE* décide de déléguer l'exécution des deux protocoles PMIP à respectivement HOE_{AMA1.2} et HOE_{FN4}.
c) Envoi d'un message d'exécution complète de handoff au HOE_{AMA1.2} :
   HOE* → HOE_{AMA1.2} : HO_Execution (MN's User ID, Flow ID, Flow Direction, Interface ID, Protocol=PMIP, Acq=1, LocUpd=1, Acquired Address=MN's NAI, Default Route=N.A.) HOE_{AMA1.2} → HOE* : HO_Execution_Cfm (MN's HoA, Result=OK)
   Etant envoyée après l'ordre d'exécution de handoff, l'adresse pour la mise à jour de la localisation, MN's HoA, est utilisée ultérieurement dans les échanges. HOE* a en outre la capacité selon l'invention de piloter la conversion des identifiants du mobile MN.
d) Exécution du handoff par HOE_{AMA1.2}:
   **HOE_{AMA1.2}** → AAA Server : ACQ_REQ (MN's NAI)
   AAA Server → HOE_{AMA1.2} : ACQ_RSP (MN's NAI, MN's HoA)
   HOE_{AMA1.2} → HOE_{AMA2.1} : LOC_UPDATE (MN's HoA, AMA_{1,2} IP Addr, Flow ID)
   HOE_{AMA2.1} → **HOE_{AMA1.2}:** LOC_RSP
e) Envoi d'un message d'exécution de handoff au HOE_{FN4}:
   HOE* → HOE_{PN4} : HO_Execution (MN's User ID, Flow ID, Flow Direction, Interface ID,
   Protocol=PMIP, Acq=0, LocUpd=1, Acquired Address=MN's HoA, Default Route=N.A.)
   HOE_{FN4} → HOE* : Ho_Execution_Cfm (Result=OK)
f) Exécution du handoff par HOE_{FN4} :
   HOE_{FN4} → HOE_{AMA1.2} : LOC_UPDATE (MN's HoA, Flow ID)
   HOE_{AMA1.2} → HOE_{FN4}: LOC_RSP
g) Envoi d'un message d'exécution du handoff au MN :
   Ceci permet d'annoncer au mobile son adresse HoA et de découvrir sa passerelle par défaut ; cela permet aussi au mobile MN d'aiguiller les flux sortants sur l'interface spécifiée. HOE* → HOE_{MN} : HO_Execution (MN's User ID, Flow ID, Flow Direction, Interface ID, Protocol=PMIP, Acq=0, LocUpd=0, Acquired Address=MN's HoA, Default Route= FN4's IP Addr)
   HOE_{MN} → HOE* : Ho_Execution_Cfm (Result=OK)

### Exemple 3 : basculement d'un réseau réseau WiMAX à un réseau UMTS

Une décision de handoff est prise par HOD* pour basculer le trafic du mobile MN d'un point d'accès AP WiMAX vers un point d'accès NodeB.

Contexte de mise en oeuvre :
HOE* est co-localisé avec HOD* (ces deux entités peuvent être déployées soit dans le réseau coeur CN, le réseau d'accès RAN, les points d'accès AP/BS ou le mobile MN)
HOE* connaît que l'AP WiMAX est sous le contrôle de HOE_{FN4}, HOE_{AMA1.2}, HOE_{AMA2.1}
HOE* connaît que le NodeB est sous le contrôle de HOE_{FN2}, HOE_{AMA1.1}, HOE_{AMA2.1}
HOE* connaît les identifiants du MN, sinon il les demande à MN ou à un serveur AAA

Scénarios d'exécution :
a) Découverte des capacités des Noeuds (FN, AMA) :
   HOE* → HOE_{FN2} : HOE_CTX_REQ
   HOE_{FN2} → HOE* : HOE_CTX_RSP (ici le FN2 répond qu'il peut mettre en oeuvre un protocole GTP)
   Comme le HOE_{FN2} et l'ancien HOE_{FN4} ne sont pas contrôlées par le même AMA, le HOE* s'enquiert de la capacité d'AMA supérieur hiérarchique de HOE_{FN2} (i.e., HOE_{AMA1.1})
   HOE* → HOE_{AMA1.1} : HOE_CTX_REQ
   HOE_{FN2} → HOE* : HOE_CTX_RSP (PMIP ou HMIP)
   Comme le HOE_{AMA1.1} et le HOE_{AMA1.2} sont contrôlées par le même AMA (i.e., HOE_{AMA2.1}), le HOE* n'émet pas d'autre requête de demande de capacité.
b) Acquisition d'adresse pour le mobile MN :
   Cette acquisition d'adresse est normalement effectuée lors de l'attachement UMTS (plus précisément, lors de la demande d'activation du contexte PDP).
c) Mise à jour de la localisation et établissement du Tunnel GTP :
   Cette étape est normalement effectuée lors de l'attachement UMTS.
d) Sélection du protocole d'exécution :

Dans l'exemple d'architecture de la figure 10, le HOE* peut choisir un des trois sous-scénarios suivants : PMIP, HMIP exécuté par le réseau ou HMIP exécuté par le terminal.

Sous-scénario 1 : PMIP (délégation de l'exécution à HOE AMA1.1)
i) Envoi d'un message d'exécution du handoff au HOE_{AMA1.1}:
   HOE* → HOE_{AMA1.1} : HO_Execution (MN's User ID, Flow ID, Flow Direction, Interface ID,
   Protocol=PMIP, Acq=0, LocUpd=1, Acquired Address=MN's HoA, Default Route= N.A.)
   L'adresse MN's HoA est récupérée lors de l'attachement au réseau UMTS.
ii) Exécution du handoff par HOE_{AMA1.1}:
   HOE_{AMA1.1} → HOE_{AMA2.1}: LOC_UPDATE (MN's HoA, AMA_{1,1} IP Addr, Flow ID)
   HOE_{AMA2.1} → HOE_{AMA1.1}: LOC_RSP
iii) Envoi d'un message d'exécution du handoff au mobile MN :
   Ceci permet au mobile MN d'aiguiller les flux sortants sur l'interface spécifiée. Le mobile doit déjà connaître son adresse HoA et son routeur par défaut lors de son attachement au réseau UMTS.
   HOE* → HOE_{MN} : HO_Execution (MN's User ID, Flow ID, Flow Direction, Interface ID, Protocol=PMIP, Acq=0, LocUpd=0, Acquired Address=N.A., Default Route=N.A.)

Sous-scénario 2 : HMIP exécuté par le réseau (délégation de l'exécution à HOE AMA1.1)
i) Envoi d'un message d'exécution du handoff au HOE_{AMA1.1}:
   HOE* → HOE_{AMA1.1} : HO_Execution (MN's User ID, Flow ID, Flow Direction, Interface ID,
   Protocol= HMIP_by_Net, Acq=0, LocUpd=1, Acquired Address= HOE_{AMA2.1} IP Addr, Default Route= N.A.)
   MN's HoA est récupérée lors de l'attachement au réseau UMTS.
ii) Mise à jour de localisation par HOE_{AMA1.1} :
   HOE_{AMA1.1} → HOE_{AMA2.1}: LOC_UPDATE (MN's HoA, AMA_{1.1} IP Addr, Flow ID)
   HOEAMA_{2.1} → HOE_{AMA1.1}: LOC_RSP
iii) Envoi d'un message d'exécution du handoff au MN :
   Ceci permet au mobile MN d'aiguiller les flux sortants sur l'interface spécifiée. Le mobile doit déjà connaître son adresse HoA et son routeur par défaut lors de son attachement au réseau UMTS.
   HOE* → HOE_{MN} : HO_Execution (MN's User ID, Flow ID, Flow Direction, Interface ID, Protocol=HMIP_by_Net, Acq=0, LocUpd=0, Acquired Address=N.A., Default Route=N.A.)

Sous-scénario 3 : HMIP exécuté par le MN
i) Envoi d'un message d'exécution du handoff au MN :
   Ceci permet aussi au mobile MN d'aiguiller les flux sortants sur l'interface spécifiée. Le mobile doit déjà connaître son adresse HoA et son routeur par défaut lors de son attachement au réseau UMTS.
   HOE* → HOE_{MN} : HO_Execution (MN's User ID, Flow ID, Flow Direction, Interface ID,
   Protocol=HMIP, Acq=0, LocUpd=1, Acquired Address=N.A., Default Route=N.A.)
   HOE_{MN} → HOE* : Ho_Execution_Cfm (Result=OK)
ii) Exécution du handoff par le mobile MN :
   Le mobile doit savoir que AMA_{1,1} est sous le contrôle de AMA_{2,1}.
   HOE_{MN} → HOE_{AMA2.1} : LOC_UPDATE (MN's HoA, AMA_{1,1} IP Addr, Flow ID)
   HOE_{AMA2,1} → HOE_{MN}: LOC_RSP

## Revendications

1. Procédé (1) de transfert de flux entre un premier point d'accès à un premier réseau d'accès à un réseau coeur de type IP auquel est attaché un terminal, dit réseau courant, et un deuxième point d'accès à un deuxième réseau d'accès au réseau coeur, dit réseau visité, le réseau étant composé des différents réseaux et points d'accès précédents, le flux, d'identifiant F_ID, étant établi entre le terminal et un correspondant, le terminal ayant autant d'identifiants MN_ID que d'interfaces d'accès à des réseaux d'accès de technologies données différentes entre elles, le procédé comprenant après prise de décision de transfert pour un couple d'identifiants de flux et de terminal F_ID, MN_ID donné:
- une étape de réception d'un ordre d'exécution HO_Decision émanant d'une entité de décision de transfert HOD*, par une première entité d'exécution HOE* destinée à convertir l'ordre d'exécution de transfert en messages d'exécution en tenant compte d'une hiérarchie d'entités d'exécution HOE du réseau,
le procédé **caractérisé en ce que** l'ordre d'exécution contient au moins les champs composés de l'identifiant de flux F_ID, l'identifiant de terminal MN_ID, un identifiant du point d'accès courant, un identifiant du point d'accès visité et un indicateur de sens du flux au niveau du terminal, et **en ce que** le procédé comporte:
- une étape de sélection, par la première entité d'exécution HOE*, d'un protocole de mobilité parmi les protocoles de mobilité supportés par les entités d'exécution de la hiérarchie associée au réseau,
- une étape de sélection, par la première entité d'exécution HOE*, dans la hiérarchie d'au moins une deuxième entité d'exécution HOE en charge d'exécuter le protocole de mobilité,
- une étape d'envoi, par la première entité d'exécution HOE*, à la deuxième entité d'exécution HOE sélectionnée, de messages d'exécution respectifs contenant aux moins les champs composés de l'identifiant de flux F_ID, l'identifiant de terminal MN_ID, un indicateur de sens du flux, un identifiant d'une interface réseau à laquelle le protocole de mobilité doit s'appliquer, un indicateur du protocole sélectionné, une adresse /Acquired Address du terminal, une adresse de routeur par défaut Default Route et deux drapeaux pour indiquer à la deuxième entité d'exécution HOE si elle est responsable de l'acquisition d'une adresse de mise à jour du terminal Acq et de la mise à jour de la localisation du terminal LocUpd.

2. Procédé (1) de transfert selon la revendication 1 dans lequel, si l'indicateur de sens de flux est positionné à entrant et si le protocole PMIP est sélectionné, alors la première entité d'exécution HOE* envoie un message d'exécution du transfert à une entité d'exécution HOE du réseau, et dans lequel, si l'indicateur de sens de flux est positionné à sortant et si le protocole PMIP est sélectionné, alors la première l'entité d'exécution HOE* envoie un message d'exécution du transfert à une entité d'exécution HOE du réseau et un message d'exécution de transfert à une entité d'exécution HOE du terminal pour la réorientation des paquets du flux.

3. Procédé (1) de transfert selon l'une des revendications précédentes, dans lequel la première entité d'exécution HOE* prend connaissance des protocoles de mobilité supportés par les entités d'exécution de la hiérarchie associée au réseau, suite à une prise de décision de transfert, de manière dynamique par échange de message avec ces entités d'exécution.

4. Procédé (1) de transfert selon l'une des revendications précédentes, dans lequel l'entité d'exécution HOE responsable de l'acquisition d'une adresse de mise à jour du terminal et de la mise à jour de la localisation du terminal est localisée dans le réseau et dans lequel la première entité d'exécution HOE* envoie un message d'exécution, après retour d'un acquittement d'exécution par l'entité d'exécution responsable de l'acquisition d'une adresse de mise à jour du terminal et de la mise à jour de la localisation du terminal, à une entité d'exécution du terminal avec les champs adresse de terminal et adresse de routeur par défaut renseignés.

5. Procédé (1) de transfert selon l'une des revendications précédentes dans lequel, la première entité d'exécution HOE* est localisée dans le terminal et a connaissance de la hiérarchie des entités d'exécution par une information fournie, suite à une prise de décision de transfert, par une entité du réseau d'accès ayant une connectivité en-dessous d'IP-User, et transmise au terminal par le point d'accès auquel est attaché le terminal.

6. Dispositif destiné à mettre en oeuvre un procédé de transfert de flux entre un premier point d'accès à un premier réseau d'accès à un réseau coeur de type IP auquel est attaché un terminal, dit réseau courant, et un deuxième point d'accès à un deuxième réseau d'accès au réseau coeur, dit réseau visité, le réseau étant composé des différents réseaux et points d'accès précédents, le flux, d'identifiant F_ID, étant établi entre le terminal et un correspondant, le terminal ayant autant d'identifiants MN_ID que d'interfaces d'accès à des réseaux d'accès de technologies données différentes entre elles, comprenant un moyen de décision HOD* de transfert et un premier moyen d'exécution HOE*, le premier moyen d'exécution HOE* étant apte à convertir un ordre d'exécution de transfert émanant du moyen de décision en messages d'exécution en tenant compte d'une hiérarchie de moyens d'exécution du réseau composée d'au moins un autre moyen d'exécution HOE, **caractérisé en ce que** :
- le premier moyen d'exécution HOE* est apte à recevoir un ordre d'exécution (HO_Decision) émis par le moyen de décision HOD* suite à une prise de décision de transfert pour un couple d'identifiants de flux et de terminal F_ID, MN_ID donné, l'ordre d'exécution contenant au moins les champs composés de l'identifiant de flux F_ID, l'identifiant de terminal MN_ID, un identifiant du point d'accès courant, un identifiant du point d'accès visité et un indicateur de sens du flux au niveau du terminal,
- le premier moyen d'exécution HOE* est apte :
a. à sélectionner un protocole de mobilité parmi les protocoles de mobilité supportés par les moyens d'exécution de la hiérarchie associée au réseau,
b. à sélectionner dans la hiérarchie au moins un moyen d'exécution HOE en charge d'exécuter le protocole de mobilité et
c. à envoyer aux moyens d'exécution HOE sélectionnés des messages d'exécution respectifs contenant aux moins les champs composés de l'identifiant de flux F_ID, l'identifiant de terminal MN_ID, un indicateur de sens du flux, un identifiant d'une interface réseau à laquelle le protocole de mobilité doit s'appliquer, un indicateur du protocole sélectionné, une adresse Acquired Address du terminal, une adresse de routeur par défaut Default Route et deux drapeaux pour indiquer moyen d'exécution s'il est responsable de l'acquisition d'une adresse de mise à jour du terminal Acq et de la mise à jour de la localisation du terminal LocUpd.

7. Système de télécommunication comprenant un réseau comprenant au moins un réseau coeur de type IP, un premier et un deuxième réseaux d'accès au réseau coeur, un premier point d'accès au premier réseau d'accès auquel est attaché un terminal, dit réseau courant, et un deuxième point d'accès au deuxième réseau d'accès, dit réseau visité, apte à transférer un flux entre le premier point d'accès et le deuxième point d'accès, le flux, d'identifiant F_ID, étant établi entre le terminal et un correspondant, le terminal ayant autant d'identifiants MN_ID que d'interfaces d'accès à des réseaux d'accès de technologies données différentes entre elles, le réseau comprenant en outre un moyen de décision HOD* de transfert et un premier moyen d'exécution HOE*, le premier moyen d'exécution HOE* étant apte à convertir un ordre d'exécution de transfert émanant du moyen de décision en messages d'exécution en tenant compte d'une hiérarchie de moyens d'exécution du réseau composée d'au moins un autre moyen d'exécution HOE, **caractérisé en ce que**, après une prise de décision de transfert pour un couple d'identifiants de flux et de terminal F_ID, MN_ID donné, le moyen de décision HOD* est apte :
- à envoyer un ordre d'exécution HO_Decision au premier moyen d'exécution HOE*, l'ordre d'exécution contenant au moins les champs composés de l'identifiant de flux F_ID, l'identifiant de terminal MN-ID, un identifiant du point d'accès courant, un identifiant du point d'accès visité et un indicateur de sens du flux au niveau du terminal,
et tel que le premier moyen d'exécution HOE* est apte :
- à sélectionner un protocole de mobilité parmi les protocoles de mobilité supportés par les moyens d'exécution de la hiérarchie associée au réseau,
- à sélectionner dans la hiérarchie au moins un moyen d'exécution HOE en charge d'exécuter le protocole de mobilité,
- à envoyer aux moyens d'exécution HOE sélectionnés des messages d'exécution respectifs contenant aux moins les champs composés de l'identifiant de flux F_ID, l'identifiant de terminal MN_ID, un indicateur de sens du flux, un identifiant d'une interface réseau à laquelle le protocole de mobilité doit s'appliquer, un indicateur du protocole sélectionné, une adresse Acquired Address du terminal, une adresse de routeur par défaut Default Route et deux drapeaux pour indiquer au moyen d'exécution s'il est responsable de l'acquisition d'une adresse de mise à jour du terminal Acq et de la mise à jour de la localisation du terminal LocUpd.

8. Dispositif d'exécution HOE*, destiné à un système de télécommunication comprenant un réseau comprenant au moins un réseau coeur de type IP, un premier et un deuxième réseaux d'accès au réseau coeur, un premier point d'accès au premier réseau d'accès auquel est attaché un terminal, dit réseau courant, et un deuxième point d'accès au deuxième réseau d'accès, dit réseau visité, le système étant apte à transférer un flux entre le premier point d'accès et le deuxième point d'accès, le flux, d'identifiant F_ID, étant établi entre le terminal et un correspondant, le terminal ayant autant d'identifiants MN_ID que d'interfaces d'accès à des réseaux d'accès de technologies données différentes entre elles, le réseau comprenant en outre un moyen de décision HOD* de transfert, apte :
- à convertir un ordre d'exécution de transfert émanant du moyen de décision HOD* en messages d'exécution en tenant compte d'une hiérarchie de moyens d'exécution du réseau courant composée d'au moins un autre moyen d'exécution HOE,
**caractérisé en ce que** le dispositif d'exécution HOE* est apte:
- à sélectionner un protocole de mobilité parmi les protocoles de mobilité supportés par les moyens d'exécution de la hiérarchie associée au réseau,
- à sélectionner dans la hiérarchie au moins un moyen d'exécution HOE en charge d'exécuter le protocole de mobilité et
- à envoyer aux moyens d'exécution HOE sélectionnés des messages d'exécution respectifs contenant aux moins les champs composés de l'identifiant de flux F_ID, l'identifiant de terminal MN_ID, un indicateur de sens du flux, un identifiant d'une interface réseau à laquelle le protocole de mobilité doit s'appliquer, un indicateur du protocole sélectionné, une adresse Acquired Address du terminal, une adresse de routeur par défaut Default Route et deux drapeaux pour indiquer au moyen d'exécution s'il est responsable de l'acquisition d'une adresse de mise à jour du terminal Acq et de la mise à jour de la localisation du terminal LocUpd.

9. Programme d'ordinateur sur un support d'informations, ledit programme comportant des instructions de programme adaptées à la mise en oeuvre d'un procédé (1) de transfert de flux selon l'une quelconque des revendications 1 à 5, lorsque ledit programme est chargé et exécuté dans un dispositif destiné à mettre en oeuvre un procédé de transfert entre un premier point d'accès à un premier réseau d'accès à un réseau coeur de type IP auquel est attaché un terminal, dit réseau courant, et un deuxième point d'accès à un deuxième réseau d'accès au réseau coeur, dit réseau visité.

10. Support d'informations comportant des instructions de programme adaptées à la mise en oeuvre d'un procédé (1) de transfert de flux entre un premier point d'accès à un premier réseau d'accès à un réseau coeur de type IP auquel est attaché un terminal, dit réseau courant, et un deuxième point d'accès à un deuxième réseau d'accès au réseau coeur, dit réseau visité, selon l'une quelconque des revendications 1 à 5, lorsque ledit programme est chargé et exécuté dans un dispositif destiné à mettre en oeuvre le procédé de transfert de flux.

## Claims

1. Method (1) for handing off flows between a first access point to a first access network to an IP-type core network to which a terminal is attached, called current network, and a second access point to a second access network to the core network, called visited network, the network being made up of the various preceding networks and access points, the flow, with the identifier F_ID, being established between the terminal and a correspondent, the terminal having as many identifiers MN_ID as access interfaces to access networks of mutually different data technologies, the method comprising, after the handoff decision has been taken for a given pair of flow and terminal identifiers F_ID, MN_ID:
- a step of reception of an execution order HO_Decision emanating from a handoff decision entity HOD*, by a first execution entity HOE* intended to convert the handoff execution order into execution messages taking into account a hierarchy of execution entities HOE of the network, the method being **characterized in that** the execution order contains at least the fields consisting of the flow identifier F_ID, the terminal identifier MN_ID, an identifier of the current access point, an identifier of the visited access point and a flow direction identifier at the terminal level, and it that it comprises
- a step of selection, by the first execution entity HOE*, of a mobility protocol from the mobility protocols supported by the execution entities of the hierarchy associated with the network,
- a step of selection, by the first execution entity HOE*, in the hierarchy of at least one second execution entity HOE responsible for executing the mobility protocol,
- a step of sending, by the first execution entity HOE*, to the selected second execution entity HOE of respective execution messages containing at least the fields consisting of the flow identifier F_ID, the terminal identifier MN_ID, a flow direction indicator, an identifier of a network interface to which the mobility protocol must be applied, an indicator of the selected protocol, an address Acquired Address of the terminal, a default router address Default Route and two flags to indicate to the second execution entity HOE if it is responsible for the acquisition of an update address for the terminal Acq and for the updating of the location of the terminal LocUpd.

2. Handoff method (1) according to Claim 1, wherein, if the flow direction indicator is set to incoming and if the PMIP protocol is selected, then the first execution entity HOE* sends a handoff execution message to an execution entity HOE of the network, and wherein, if the flow direction indicator is set to outgoing and if the PMIP protocol is selected, then the first execution entity HOE* sends a handoff execution message to an execution entity HOE of the network and a handoff execution message to an execution entity HOE of the terminal to reorient the packets of the flow.

3. Handoff method (1) according to either of the preceding claims, wherein the first execution entity HOE* learns the mobility protocols supported by the execution entities of the hierarchy associated with the network, following a handoff decision, dynamically by message interchange with these execution entities.

4. Handoff method (1) according to one of the preceding claims, wherein the execution entity HOE responsible for the acquisition of an update address of the terminal and for the updating of the location of the terminal is located in the network and wherein the first execution entity HOE* sends an execution message, after the return of an execution acknowledgement by the execution entity responsible for the acquisition of an update address of the terminal and for the updating of the location of the terminal, to an execution entity of the terminal with the terminal address and default router address fields completed.

5. Handoff method (1) according to one of the preceding claims, wherein the first execution entity HOE* is located in the terminal and knows the hierarchy of the execution entities through information supplied, following a handoff decision, by an entity of the access network that has connectivity below IP-User, and transmitted to the terminal by the access point to which the terminal is attached.

6. Device intended to implement a method for handing off flows between a first access point to a first access network to an IP-type core network to which a terminal is attached, called current network, and a second access point to a second access network to the core network, called visited network, the network being made up of the various preceding networks and access points, the flow, with the identifier F_ID, being established between the terminal and a correspondent, the terminal having as many identifiers MN_ID as access interfaces to access networks of mutually different data technologies, comprising a handoff decision means HOD* and a first execution means HOE*, the first execution means HOE* being able to convert a handoff execution order emanating from the decision means into execution messages by taking into account a hierarchy of execution means of the network consisting of at least one other execution means HOE, **characterized in that**:
- the first execution means HOE* is able to receive an execution order HO_Decision sent by the decision means HOD*, following a handoff decision for a given pair of flow and terminal identifiers F_ID, MN_ID, the execution order containing at least the fields consisting of the flow identifier F_ID, the terminal identifier MN_ID, an identifier of the current access point, an identifier of the visited access point and a flow direction indicator at the terminal level,
- the first execution means HOE* is able:
a. to select a mobility protocol from the mobility protocols supported by the execution means of the hierarchy associated with the network,
b. to select from the hierarchy at least one execution means HOE responsible for executing the mobility protocol, and
c. to send to the selected execution means HOE respective execution messages containing at least the fields consisting of the flow identifier F_ID, the terminal identifier MN_ID, a flow direction indicator, an identifier of a network interface to which the mobility protocol must be applied, an indicator of the selected protocol, an address Acquired Address of the terminal, a default router address Default Route and two flags to indicate to the execution means if it is responsible for the acquisition of an update address for the terminal Acq and for the updating of the location of the terminal LocUpd.

7. Telecommunication system comprising a network comprising at least one IP-type core network, a first and a second access networks to the core network, a first access point to the first access network to which a terminal is attached, called current network, and a second access point to the second access network, called visited network, able to handoff a flow between the first access point and the second access point, the flow, with the identifier F_ID, being established between the terminal and a correspondent, the terminal having as many identifiers MN_ID as access interfaces to access networks of mutually different data technologies, the network also comprising a handoff decision means HOD* and a first execution means HOE*, the first execution means HOE* being able to convert a handoff execution order emanating from the decision means into execution messages by taking into account a hierarchy of execution means of the network consisting of at least one other execution means HOE, **characterized in that**, after a handoff decision has been taken for a given pair of flow and terminal identifiers F_ID, MN_ID, the decision means HOD* is able:
- to send an execution order HO_Decision to the first execution means HOE*, the execution order containing at least the fields consisting of the flow identifier F_ID, the terminal identifier MN_ID, an identifier of the current access point, an identifier of the visited access point and a flow direction indicator at the terminal level,
and **in that** the first execution means HOE* is able:
- to select a mobility protocol from the mobility protocols supported by the execution means of the hierarchy associated with the network,
- to select from the hierarchy at least one execution means HOE responsible for executing the mobility protocol,
- to send to the selected execution means HOE respective execution messages containing at least the fields consisting of the flow identifier F_ID, the terminal identifier MN_ID, a flow direction indicator, an identifier of a network interface to which the mobility protocol must be applied, an indicator of the selected protocol, an address Acquired Address of the terminal, a default router address Default Route and two flags to indicate to the execution means if it is responsible for the acquisition of an update address for the terminal Acq and for the updating of the location of the terminal LocUpd.

8. Execution device HOE*, intended for a telecommunication system comprising a network comprising at least one IP-type core network, a first and a second access networks to the core network, a first access point to the first access network to which a terminal is attached, called current network, and a second access point to the second access network, called visited network, the system being able to handoff a flow between the first access point and the second access point, the flow, with the identifier F_ID, being established between the terminal and a correspondent, the terminal having as many identifiers MN_ID as access interfaces to access networks of mutually different data technologies, the network also comprising a handoff decision means HOD*, able:
- to convert a handoff execution order emanating from the decision means HOD* into execution messages by taking into account a hierarchy of execution means of the current network consisting of at least one other execution means HOE, **characterized in that** the execution device HOE* is able:
- to select a mobility protocol from the mobility protocols supported by the execution means of the hierarchy associated with the network,
- to select from the hierarchy at least one execution means HOE responsible for executing the mobility protocol, and
- to send to the selected execution means HOE respective execution messages containing at least the fields consisting of the flow identifier F_ID, the terminal identifier MN_ID, a flow direction indicator, an identifier of a network interface to which the mobility protocol must be applied, an indicator of the selected protocol, an address Acquired Address of the terminal, a default router address Default Route and two flags to indicate to the execution means if it is responsible for the acquisition of an update address for the terminal Acq and for the updating of the location of the terminal LocUpd.

9. Computer program on an information medium, said program comprising program instructions suitable for implementing a flow handoff method (1) according to any one of Claims 1 to 5, when said program is loaded and run in a device intended to implement a handoff method between a first access point to a first access network to an IP-type core network to which a terminal is attached, called current network, and a second access point to a second access network to the core network, called visited network.

10. Information medium comprising program instructions suitable for implementing a method (1) for handing off flows between a first access point to a first access network to an IP-type core network to which a terminal is attached, called current network, and a second access point to a second access network to the core network, called visited network, according to any one of Claims 1 to 5, when said program is loaded and run in a device intended to implement the flow handoff method.

## Patentansprüche

1. Verfahren (1) zur Flussweiterleitung zwischen einem ersten Zugangspunkt zu einem ersten Zugangsnetz zu einem Kernnetz vom Typ IP, mit dem ein Endgerät verbunden ist, laufendes Netz genannt, und einem zweiten Zugangspunkt zu einem zweiten Zugangsnetz zum Kernnetz, besuchtes Netz genannt, wobei das Netz aus den verschiedenen vorhergehenden Netzen und Zugangspunkten besteht, wobei der Fluss mit der Kennung F_ID zwischen dem Endgerät und einem Teilnehmer aufgebaut wird, wobei das Endgerät ebenso viele Kennungen MN_ID wie Zugangsschnittstellen zu Zugangsnetzen voneinander unterschiedlicher gegebener Technologien hat, wobei das Verfahren nach der Weiterleitungsentscheidung für ein gegebenes Paar von Fluss- und Endgerätkennungen F_ID, MN_ID enthält:
- einen Schritt des Empfangs eines Ausführungsbefehls HO_Decision, der von einer Weiterleitungsentscheidungseinheit HOD* kommt, durch eine erste Ausführungseinheit HOE*, die dazu bestimmt ist, den Weiterleitungs-Ausführungsbefehl unter Berücksichtigung einer Hierarchie von Ausführungseinheiten HOE des Netzes in Ausführungsmitteilungen umzuwandeln, wobei das Verfahren **dadurch gekennzeichnet ist, dass** der Ausführungsbefehl mindestens die aus der Flusskennung F_ID, der Endgerätkennung MN_ID, einer Kennung des laufenden Zugangspunkts, einer Kennung des besuchten Zugangspunkts und einem Richtungsanzeiger des Flusses im Bereich des Endgerät bestehenden Felder enthält, und dass das Verfahren aufweist:
- einen Schritt der Auswahl, durch die erste Ausführungseinheit HOE*, eines Mobilitätsprotokolls unter den Mobilitätsprotokollen, die von den Ausführungseinheiten der dem Netz zugeordneten Hierarchie unterstützt werden,
- einen Schritt der Auswahl, durch die erste Ausführungseinheit HOE*, in der Hierarchie mindestens einer zweiten Ausführungseinheit HOE, die für die Ausführung des Mobilitätsprotokolls zuständig ist,
- einen Schritt des Sendens, durch die erste Ausführungseinheit HOE*, an die ausgewählte zweite Ausführungseinheit HOE, von jeweiligen Ausführungsmitteilungen, die mindestens die aus der Flusskennung F_ID, der Endgerätkennung MN_ID, einem Richtungsanzeiger des Flusses, einer Kennung einer Netzschnittstelle, an die das Mobilitätsprotokoll anzuwenden ist, einem Anzeiger des ausgewählten Protokolls, einer Adresse Acquired Address des Endgeräts, einer Standard-Routeradresse Default Route und zwei Flags, um der zweiten Ausführungseinheit HOE anzuzeigen, ob sie für die Erfassung einer Aktualisierungsadresse des Endgeräts Acq und die Aktualisierung des Standorts des Endgeräts LocUpd verantwortlich ist, bestehenden Felder enthalten.

2. Weiterleitungsverfahren (1) nach Anspruch 1, bei dem, wenn der Flussrichtungsanzeiger auf eingehend positioniert ist, und wenn das Protokoll PMIP ausgewählt wird, die erste Ausführungseinheit HOE* eine Ausführungsmitteilung der Weiterleitung an eine Ausführungseinheit HOE des Netzes sendet, und bei dem, wenn der Flussrichtungsanzeiger auf ausgehend positioniert ist, und wenn das Protokoll PMIP ausgewählt wird, die erste Ausführungseinheit HOE* eine Ausführungsmitteilung der Weiterleitung an eine Ausführungseinheit HOE des Netzes und eine Ausführungsmitteilung der Weiterleitung an eine Ausführungseinheit HOE des Endgeräts zur Neuausrichtung der Pakete des Flusses sendet.

3. Weiterleitungsverfahren (1) nach einem der vorhergehenden Ansprüche, bei dem die erste Ausführungseinheit HOE* die von den Ausführungseinheiten der dem Netz zugeordneten Hierarchie unterstützten Mobilitätsprotokolle nach einer Weiterleitungsentscheidung dynamisch durch Mitteilungsaustausch mit diesen Ausführungseinheiten zur Kenntnis nimmt.

4. Weiterleitungsverfahren (1) nach einem der vorhergehenden Ansprüche, bei dem die Ausführungseinheit HOE, die für die Erfassung einer Aktualisierungsadresse des Endgeräts und die Aktualisierung des Standorts des Endgeräts verantwortlich ist, sich in dem Netz befindet, und bei dem die erste Ausführungseinheit HOE* nach Rücksendung einer Ausführungsquittierung durch die Ausführungseinheit, die für die Erfassung einer Aktualisierungsadresse des Endgeräts und die Aktualisierung des Standorts des Endgeräts verantwortlich ist, eine Ausführungsmitteilung mit den Feldern Endgerätadresse und Standard-Routeradresse ausgefüllt an eine Ausführungseinheit des Endgeräts sendet.

5. Weiterleitungsverfahren (1) nach einem der vorhergehenden Ansprüche, bei dem die erste Ausführungseinheit HOE* sich im Endgerät befindet und die Hierarchie der Ausführungseinheiten durch eine Information kennt, die nach einer Weiterleitungsentscheidung von einer Einheit des Zugangsnetzes, die eine Konnektivität unter IP-User hat, geliefert und an das Endgerät von dem Zugangspunkt übertragen wird, mit dem das Endgerät verbunden ist.

6. Vorrichtung, die dazu bestimmt ist, ein Flussweiterleitungsverfahren zwischen einem ersten Zugangspunkt zu einem ersten Zugangsnetz zu einem Kernnetz vom Typ IP, mit dem ein Endgerät verbunden ist, laufendes Netz genannt, und einem zweiten Zugangspunkt zu einem zweiten Zugangsnetz zum Kernnetz, besuchtes Netz genannt, durchzuführen, wobei das Netz aus den vorhergehenden verschiedenen Netzen und Zugangspunkten besteht, wobei der Fluss mit der Kennung F_ID zwischen dem Endgerät und einem Teilnehmer aufgebaut wird, wobei das Endgerät ebenso viele Kennungen MN_ID wie Zugangsschnittstellen zu Zugangsnetzen voneinander unterschiedlicher gegebener Technologien hat, die eine Weiterleitungs-Entscheidungseinrichtung HOD* und einer erste Ausführungseinrichtung HOE* enthält, wobei die erste Ausführungseinrichtung HOE* einen von der Entscheidungseinrichtung kommenden Weiterleitungs-Ausführungsbefehl unter Berücksichtigung einer Hierarchie von Ausführungseinrichtungen des Netzes, die aus mindestens einer anderen Ausführungseinrichtung HOE besteht, in Ausführungsmitteilungen umwandeln kann, **dadurch gekennzeichnet, dass**:
- die erste Ausführungseinrichtung HOE* einen Ausführungsbefehl (HO_Decision) empfangen kann, der von der Entscheidungseinrichtung HOD* nach einer Weiterleitungsentscheidung für ein gegebenes Paar von Flusskennungen und Endgerät F_ID, MN_ID gesendet wird, wobei der Ausführungsbefehl mindestens die aus der Flusskennung F_ID, der Endgerätkennung MN_ID, einer Kennung des laufenden Zugangspunkts, einer Kennung des besuchten Zugangspunkts und einem Richtungsanzeiger des Flusses im Bereich des Endgeräts bestehenden Felder enthält,
- die erste Ausführungseinrichtung HOE* in der Lage ist:
a. ein Mobilitätsprotokoll unter den von den Ausführungseinrichtungen der dem Netz zugeordneten Hierarchie unterstützten Mobilitätsprotokollen auszuwählen,
b.in der Hierarchie mindestens eine Ausführungseinrichtung HOE auszuwählen, die für die Ausführung des Mobilitätsprotokolls zuständig ist, und
c. an die ausgewählten Ausführungseinrichtungen HOE Ausführungsmitteilungen zu senden, die mindestens die aus der Flusskennung F_ID, der Endgerätkennung MN_ID, einem Richtungsanzeiger des Flusses, einer Kennung einer Netzschnittstelle, an die das Mobilitätsprotokoll anzuwenden ist, einem Anzeiger des ausgewählten Protokolls, einer Adresse Acquired Address des Endgeräts, einer Standard-Routeradresse Default Route und zwei Flags, um der Ausführungseinrichtung anzuzeigen, ob sie für die Erfassung einer Aktualisierungsadresse des Endgeräts Acq und die Aktualisierung des Standorts des Endgeräts LocUpd verantwortlich ist, bestehenden Felder enthalten.

7. Telekommunikationssystem, das ein Netz enthält, welches mindestens ein Kernnetz vom Typ IP, ein erstes und ein zweites Zugangsnetz zum Kernnetz, einen ersten Zugangspunkt zum ersten Zugangsnetz, mit dem ein Endgerät verbunden ist, laufendes Netz genannt, und einen zweiten Zugangspunkt zum zweiten Zugangsnetz, besuchtes Netz genannt, enthält, das einen Fluss zwischen dem ersten Zugangspunkt und dem zweiten Zugangspunkt weiterleiten kann, wobei der Fluss der Kennung F_ID zwischen dem Endgerät und einem Teilnehmer aufgebaut wird, wobei das Endgerät ebenso viele Kennungen MN_ID wie Zugangsschnittstellen zu Zugangsnetzen voneinander unterschiedlicher gegebener Technologien hat, wobei das Netz außerdem eine Weiterleitungs-Entscheidungseinrichtung HOD* und eine erste Ausführungseinrichtung HOE* enthält, wobei die erste Ausführungseinrichtung HOE* einen von der Entscheidungseinrichtung kommenden Weiterleitungs-Ausführungsbefehl unter Berücksichtigung einer Hierarchie von Ausführungseinrichtungen des Netzes, die aus mindestens einer anderen Ausführungseinrichtung HOE besteht, in Ausführungsmitteilungen umwandeln kann, **dadurch gekennzeichnet, dass** die Entscheidungseinrichtung HOD* nach einer Weiterleitungsentscheidung für ein gegebenes Paar von Flusskennungen und Endgerät F_ID, MN_ID in der Lage ist:
- einen Ausführungsbefehl HO_Decision an die erste Ausführungseinrichtung HOE* zu senden, wobei der Ausführungsbefehl mindestens die aus der Flusskennung F_ID, der Endgerätkennung MN_ID, einer Kennung des laufenden Zugangspunkts, einer Kennung des besuchten Zugangspunkts und einem Richtungsanzeiger des Flusses im Bereich des Endgeräts bestehenden Felder enthält,
und dass die erste Ausführungseinrichtung HOE* in der Lage ist:
- ein Mobilitätsprotokoll aus den von den Ausführungseinrichtungen der dem Netz zugeordneten Hierarchie unterstützten Mobilitätsprotokollen auszuwählen,
- in der Hierarchie mindestens eine Ausführungseinrichtung HOE auszuwählen, die für die Ausführung des Mobilitätsprotokolls zuständig ist,
- an die ausgewählten Ausführungseinrichtungen HOE jeweils Ausführungsmitteilungen zu senden, die mindestens die aus der Flusskennung F_ID, der Endgerätkennung MN_ID, einem Richtungsanzeiger des Flusses, einer Kennung einer Netzschnittstelle, an die das Mobilitätsprotokoll anzuwenden ist, einem Anzeiger des ausgewählten Protokolls, einer Adresse Acquired Address des Endgeräts, einer Standard-Routeradresse Default Route, und zwei Flags, um der Ausführungseinrichtung anzuzeigen, ob sie für die Erfassung einer Aktualisierungsadresse des Endgeräts Acq und die Aktualisierung des Standorts des Endgeräts LocUpd verantwortlich ist, bestehenden Felder enthalten.

8. Ausführungsvorrichtung HOE*, die für ein Telekommunikationssystem bestimmt ist, das ein Netz enthält, welches mindestens ein Kernnetz vom Typ IP, ein erstes und ein zweites Zugangsnetz zum Kernnetz, einen ersten Zugangspunkt zum ersten Zugangsnetz, mit dem ein Endgerät verbunden ist, laufendes Netz genannt, und einen zweiten Zugangspunkt zum zweiten Zugangsnetz, besuchtes Netz genannt, enthält, wobei das System einen Fluss zwischen dem ersten Zugangspunkt und dem zweiten Zugangspunkt weiterleiten kann, wobei der Fluss der Kennung F_ID zwischen dem Endgerät und einem Teilnehmer aufgebaut wird, wobei das Endgerät ebenso viele Kennungen MN_ID wie Zugangsschnittstellen zu Zugangsnetzen voneinander unterschiedlicher gegebener Technologien hat, wobei das Netz außerdem eine Weiterleitungs-Entscheidungseinrichtung HOD* enthält, die in der Lage ist:
- einen von der Entscheidungseinrichtung HOD* kommenden Weiterleitungs-Ausführungsbefehl unter Berücksichtigung einer Hierarchie von Ausführungseinrichtungen des laufenden Netzes, die aus mindestens einer anderen Ausführungseinrichtung HOE besteht, in Ausführungsmitteilungen umzuwandeln,
**dadurch gekennzeichnet, dass** die Ausführungsvorrichtung HOE* in der Lage ist:
- ein Mobilitätsprotokoll aus den von den Ausführungseinrichtungen der dem Netz zugeordneten Hierarchie unterstützten Mobilitätsprotokollen auszuwählen,
- in der Hierarchie mindestens eine Ausführungseinrichtung HOE auszuwählen, die für die Ausführung des Mobilitätsprotokolls zuständig ist, und
- an die ausgewählten Ausführungseinrichtungen HOE jeweilige Ausführungsmitteilungen zu senden, die mindestens die aus der Flusskennung F_ID, der Endgerätkennung MN_ID, einem Richtungsanzeiger des Flusses, einer Kennung einer Netzschnittstelle, an die das Mobilitätsprotokoll anzuwenden ist, einem Anzeiger des ausgewählten Protokolls, einer Adresse Acquired Address des Endgeräts, einer Standard-Routeradresse Default Route und zwei Flags, um der Ausführungseinrichtung anzuzeigen, ob sie für die Erfassung einer Aktualisierungsadresse des Endgeräts Acq und die Aktualisierung des Standorts des Endgeräts LocUpd verantwortlich ist, bestehenden Felder enthalten.

9. Computerprogramm auf einem Datenträger, wobei das Programm Programmanweisungen aufweist, die für die Durchführung eines Flussweiterleitungsverfahrens (1) nach einem der Ansprüche 1 bis 5 geeignet sind, wenn das Programm in eine Vorrichtung geladen und dort ausgeführt wird, die dazu bestimmt ist, ein Weiterleitungsverfahren zwischen einem ersten Zugangspunkt zu einem ersten Zugangsnetz zu einem Kernnetz vom Typ IP, mit dem ein Endgerät verbunden ist, laufendes Netz genannt, und einem zweiten Zugangspunkt zu einem zweiten Zugangsnetz zu einem Kernnetz, besuchtes Netz genannt, durchzuführen.

10. Datenträger, der Programmanweisungen aufweist, die zur Durchführung eines Flussweiterleitungsverfahrens (1) zwischen einem ersten Zugangspunkt zu einem ersten Zugangsnetz zu einem Kernnetz vom Typ IP, mit dem ein Endgerät verbunden ist, laufendes Netz genannt, und einem zweiten Zugangspunkt zu einem zweiten Zugangsnetz zum Kernnetz, besuchtes Netz genannt, nach einem der Ansprüche 1 bis 5, geeignet sind, wenn das Programm in eine zur Durchführung des Flussweiterleitungsverfahrens bestimmte Vorrichtung geladen und dort ausgeführt wird.
